Europäisches Patentamt

European Patent Office

Office européen des brevets

(19)

(11) **EP 1 367 503 A1**

(12) **EUROPEAN PATENT APPLICATION**

(43) Date of publication:
**03.12.2003 Bulletin 2003/49**

(51) Int Cl.⁷: **G06F 17/30**

(21) Application number: **02011493.0**

(22) Date of filing: **24.05.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Sun Microsystems, Inc.**
**Santa Clara, California 95054 (US)**

(72) Inventor: **Janssen, Ocke**
**20255 Hamburg (DE)**

(74) Representative: **Betten & Resch**
**Patentanwälte,**
**Theatinerstrasse 8**
**80333 München (DE)**

(54) **Method for displaying and modifying a relational database schema**

(57)     Methods and systems for designing a database design and navigating through the structure of the database design are provided. A method implements on a data processing system a user interface for providing a structural view of a database design which comprises a plurality of tables and relations linking said tables. The method comprises analyzing the structure of said tables and relations, extracting a structural representation of said database design from said structure of said tables and relations, and preparing data for displaying in a first graphical user interface said structural view of said database design corresponding to said structural representation. The method further enables the user to modify the structure of the database design by selecting a database object and modifying the selected database object in response to a modification request issued by the user.

```
            Start
              |
   ┌──────────────────────┐
   │  Analyze structure of │ ～ 310
   │   tables and relations │
   └──────────────────────┘
              |
   ┌──────────────────────┐
   │ Extract structural     │
   │ representation         │ ～ 320
   │ from structure of      │
   │ tables and relations   │
   └──────────────────────┘
              |
   ┌──────────────────────┐
   │ Prepare data for       │
   │ displaying             │
   │ a structural view      │ ～ 330
   │ corresponding to       │
   │ structural             │
   │ representation         │
   └──────────────────────┘
              |
          to Fig. 11
```

Fig. 5

EP 1 367 503 A1

**Description**

BACKGROUND OF THE INVENTION

1. Field of the Invention

The present invention relates to methods and systems for implementing on a data processing system a user interface for providing a structural view of a database design and, in particular, to methods and systems enabling a user to navigate through the structure of a relational database.

2. Description of the Related Art

Databases are widely distributed for organizing, managing, and querying data in an ordered form. So-called relational databases are based on table structures in which the data is organized into tables and relations between the tables. The tables consist of rows and columns of data. A database will typically have many tables and each table will typically have multiple rows and multiple columns.

Columns can be linked by relations which means that a column of a first table refers to a column of a second table. The columns linked in such a manner have to be of the same type.

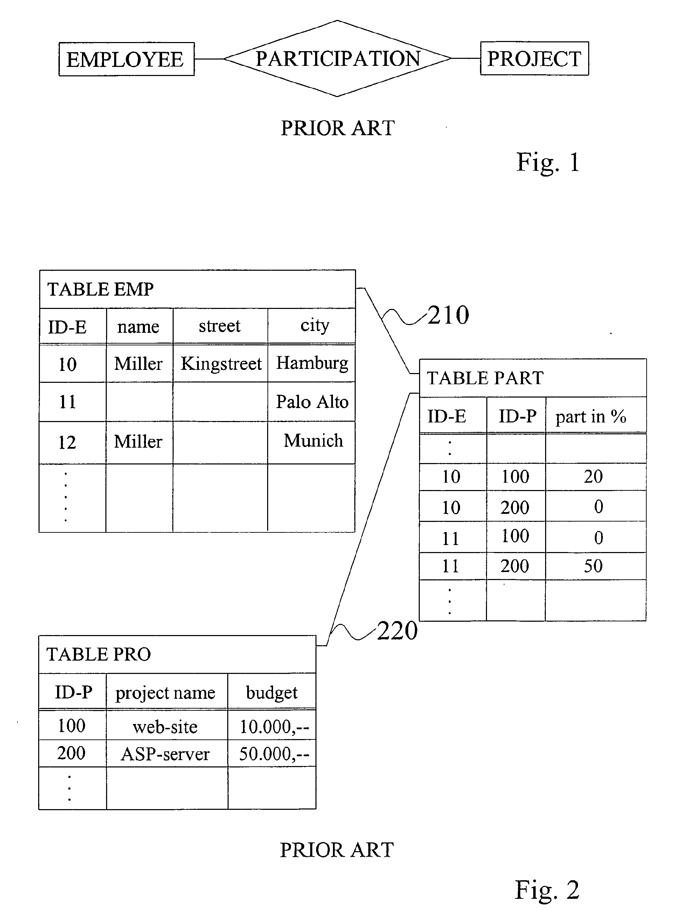

In order to explain some basic principles of relational databases reference is made to Figs. 1 and 2. Fig. 1 shows a very simple example of an entity-relationship model which can be transformed to a relational database design defined in database tables shown in Fig. 2.

The entity-relationship model of Fig. 1 includes two entity sets EMPLOYEE and PROJECT and a relationship set PARTICIPATION which links the two entity sets. The entity set EMPLOYEE summarizes all employees of a company as entities of the same type having attributes "name", "street" and "city". Current projects of the company are summarized in the entity set PROJECT with attributes "project name" and "budget". The relationship set PARTICIPATION shows the participation of the employees in the projects of the company and a further attribute "part in %" defines the percentage of participation of an employee in a given project.

The corresponding table structure is shown in Fig. 2. The tables are organized in columns and rows. One row is typically called a data set or a data record defining an entity or relationship, and the columns typically contain different attributes of the individual data sets. The tables further have an identification key. This identification key is an attribute or a combination of attributes which can uniquely identify the data sets in the table.

Tables EMP and PRO in Fig. 2 represent the table design of the two entity sets EMPLOYEE and PROJECT in Fig. 1, respectively. Both tables as a first column have the identification keys ID-E and ID-P, respectively, also called a primary key. Primary keys uniquely identify a data set by a name within the tables. In tables EMP and PRO the primary keys are numbers. The tables have further columns for attributes of the data sets. So, in the table EMP the number "10" in the column ID-E identifies the data set of employee Miller who lives in Hamburg, Kingstreet.

The relationship set PARTICIPATION in Fig. 1 is transformed to table PART as shown in Fig. 2. A table representing a relationship set has so called foreign keys being equal to the primary keys of the tables representing the entity sets to which the relationship set relates. In the example in Fig. Y, the table PART has the foreign keys "ID-E" and "ID-P". The primary key of the table PART is the identification key composed of the two foreign keys. The further attribute "part in %" is provided in the third column of table PART.

From the tables and the relation in Fig. 2 it can be derived that employee Miller in Hamburg has a 20% participation in the project "web-site" with an overall budget of $ 10.000,-.

Of course, for complex systems, like investment management, warehousing etc. also a database with a complex table structure is necessary. Such complex relational databases are designed as so called database relation designs on a database design system. The database design system typically is a workstation such as a computer with a monitor and input devices and a CAD (computer aided design) software tool which allows a user to design a relational database by inputting tables and relations in a design window displaying a table view of the database design

If a complex database relation design is opened on a design system, only a part of the tables and relations can be displayed at once which leads to that the user may lose the overview of the overall database design. Moreover, the user has to scroll through the database relation design for creating a relation between two tables which can not be displayed at once by inserting a primary key of a first table as foreign key in a second table by a drag and drop operation. In this situation, it often happens that the user loses his drag and drop item when scrolling, or that the dragged item is dropped on the wrong destination item.

In a typically database relation design, the user cannot see the type of a column. If now the user wants to create a relation between two tables, first, these two tables need to be present before creating the relation. Second, the type of the columns which shall refer to each other has to be checked, since only columns of the same type can be used to link two tables by a relation. This check can only be done by opening another design view, the database table design, in which all properties of the columns including their type are displayed. Only at this point, after checking the type of the two columns in the database table design view and returning to the database relation design view, can the user create the relation between the tables by the described drag, scroll and drop operation. However, as the database design contains multiple tables with typical multiple columns, the known database design views are too intricate and unstructured as that they would allow to create relations between tables in an efficient manner.

Thus, typical database design systems fail to provide the user with a sufficient flexible and/or equipped user interface.

Based on the foregoing, embodiments of the present invention provide improved methods, systems and articles of manufacture for handling database designs.

SUMMARY OF THE INVENTION

Methods, systems and articles of manufacture consistent with the present invention enables a user to easily navigate through a database design structure that is prepared for displaying in a graphical user interface as a structural view of the database design. The methods, systems and articles of manufacture consistent with the present invention may be described as a database design navigator which provides a structural view of the structure of the tables and their relation to the user. According to an embodiment consistent with methods and systems of the invention, the database design navigator enables the user to navigate through the structure of the database design by providing a hierarchical tree view of the database design structure. Thus, the database design navigator provides a structural view in which, e.g., tables are depicted as root entries and each table has subentries like primary and foreign keys which will have subentries as well, namely, their columns. This allows the user to keep control and not to lose the overview of the tables, their structure and the relations between the tables in a database design.

Additionally, methods, systems, and articles of manufacture consistent with the present invention overcome the shortcomings of the related art by providing a more flexible user interface for a database design structure which allows a user to get structural information of database objects in the database design. Besides tables and keys, the user interface may also provide structural information or even further non-structural information about properties of database objects. A database object is understood as any element comprised in a database design, like tables, keys, relations, columns, schemes, catalogues, etc. Such methods, systems and articles of manufacture may also provide an option to the user that enables a drag-and-drop mechanism to create relations between different tables in the database design. This allows the user to easily link tables by relation although the tables cannot be depicted at the same time in a prior art user interface because these tables are too big or too far away in a conventional table view. Thus, the methods, systems, and articles of manufacture provide an option to an user that avoids the need for a drag-and-drop operation together with a scrolling operation in order to link two distant tables. With this option, the user is able to link two tables by relation much faster and safer than in a conventional user interface because the user does not have to scroll through the table view which is time-consuming and often leads to the user losing his dragged item when he is scrolling.

In the structural view according to an embodiment of the present invention, the database objects are displayed as nodes in a hierarchical tree view, which allows the user to use the structural view in the user interface as a top view of the database design which is particularly useful when the user has zoomed into a specific area of the table view.

In an embodiment, the structural representation includes information about primary and/or foreign keys and columns of the tables. The structural view is then provided as a hierarchical tree view in which representations for the tables are prepared for displaying as sibling nodes, representations of the primary and/or foreign keys and a representation of the columns are prepared for displaying as child nodes to the node of the respective table and the column names of the primary and foreign keys and of the columns are prepared for displaying as child nodes to the respective primary key, foreign key and column nodes. In another embodiment, the prepared data comprise representations of the tables, keys, columns and their names and, are then transmitted to a display unit and displayed in the first graphical user interface. Thus, the structural view displayed in the first graphical user interface easily gives the user an overview of the structure of the tables in the database design.

In a further embodiment there is provided a method which enables the user to navigate through the structure of a database design. In the hierarchical tree view, an indication is displayed for each node as to whether this node has any child nodes. If so, in response to a corresponding user request, the child node is incorporated into its parent node to thereby reduce the number of branches displayed in the tree view and to thereby reduce the overall complexity. In response to a corresponding user request, the thus "compressed" representation again is "expanded" such that the child node again is displayed as a separate node in the tree view.

In yet a further embodiment a method is provided which enables a user to modify the structure of the database design. In response to a request issued by the user a database object is selected and modified. With the request the user determines how the database object should be modified. After the modification has been completed, the database design is updated and data for displaying an update of the hierarchical tree view are prepared. By means of the first graphical user interface an update of the hierarchical tree view can then be displayed.

Additionally, methods, systems, and articles of manufacture consistent with the present invention enable the user to create a new table with predefined foreign keys by selecting the columns of an existing table which is displayed in the user interface, and then these selected columns are used as the foreign key columns in the new table which is then created. With this option, the type checking of the primary key and the foreign key which are intended to be used in that table relation is not necessary anymore, since the type of the foreign key column is copied from the selected primary key column. Additionally, the drag-and-drop operation which otherwise would be necessary to link the two tables is also no longer necessary. The option can be implemented in a user interface according to the present invention, in which primary keys of present tables are selectable and wherein, for example, an input option is provided to the user to create the new table after a primary key column has been selected.

In yet a further embodiment, in a second graphical user interface, the tables and relations are prepared for displaying in a view different to the hierarchical tree view. If the database design is modified, the prepared data for displaying in the first and in the second user interface are brought into conformity with the modified database design. This is particularly useful during the design process of the database since the user can design the database in both views and each time the database design views in the first and second graphical user interface are updated upon user request.

In accordance with methods consistent with the present invention, a method for implementing a user interface is provided which provides a structural view of a database design. The structure of the tables and relations of a database design is analyzed and a structural representation of the database design is extracted from this structure. Then, data for displaying the structural view in a first graphical user interface corresponding to the structural representation are prepared.

In accordance with the present invention, a software tool is provided for implementing on a data processing system a user interface for providing a structural view of a database design. The database design comprises database objects like tables and relations linking said tables. The software tool comprises a software code portion for analyzing the structure of said tables and relations and a software code portion for extracting a structural representation of the database design from the structure of said tables and relations. Then, based on the extracted structural representation, a software code portion prepares data for displaying in a first graphical user interface the structural view of said database design corresponding to said structural representation. The data may then be displayed by a further software code portion in the first graphical user interface.

In accordance with the present invention, a computer program and a computer program product are provided. The computer program and the computer program product comprise a computer program code which when executed on a data processing system enables the data processing system to carry out a method consistent with the present invention.

A computer program product comprises a medium which stores or transports computer-readable code, or in which computer-readable code can be embedded. Some examples of computer program products are CD-ROM disks, ROM cards, floppy disks, magnetic tapes, computer hard drives, servers on a network and signals representing a computer-readable program code which are transmitted over a network like a LAN or WAN or the Internet.

In accordance with systems consistent with the present invention, a data processing system is provided. The data processing system comprises a secondary storage device, a processing unit and a storage unit. The secondary storage device comprises a database design having tables and relations linking these tables. The processing unit analyses in response to software code portions stored in the storage unit the structure of said tables and relations accessible by the processing unit and the processing unit further extracts in response to software code portions stored in said storage unit a structural representation of the database design from the structure of said tables and relations. Then, the processing unit prepares in response to software code portions stored in the storage unit data for displaying in a graphical user interface a structural view of said database design corresponding to the structural representation.

In accordance with articles of manufacture consistent with the present invention, a computer readable medium is provided. The computer-readable medium contains instructions that cause a processing system to perform a method for implementing on a data processing system a user interface for providing a structural representation of a database design which comprises a plurality of tables and relations linking these tables. The method comprises the operations analyzing the structure of said tables and relations; extracting a structural representation of the database design from the structure of said tables and relations; and preparing data for displaying in a first graphical user interface the structural view of the database design corresponding to the structural representation.

In accordance with articles of manufacture consistent with the present invention, a computer readable memory device is provided. The computer-readable memory device is encoded with a data structure with entries, each entry reflecting a database object in a structural representation of a database design that is provided by a computer program which is encoded in the memory device and which is run by a processor. Each database object comprises a first storage area that stores a representation of the database object; a second storage area that stores structural information of the database object, and a third storage area that stores type information and/or properties of the database object.

The above-mentioned and other features, utilities, and advantages of the invention will become apparent from the following detailed description of preferred embodiments of the invention together with the accompanying drawings.

Other systems, methods, features and advantages of the invention will be or will become apparent to one skilled in the art upon examination of the following Figs. and detailed description. It is intended that all such additional systems, methods, features and advantages be included within the description, be within the scope of the invention, and be protected by the accompanying drawings.

BRIEF DESCRIPTION OF THE DRAWINGS

In the accompanying drawings:

Fig. 1 depicts an example of an entity-relationship model;

Fig. 2 depicts a database relation design for the example of Fig. 1;

Fig. 3 depicts a block diagram of a data processing system with which embodiments of the present invention may be implemented;

Fig. 4 depicts a block diagram of a client-server based data processing system with which embodiments of the present invention may be implemented;

Fig. 5 depicts a flow diagram illustrating high-level operations in accordance with methods and systems consistent with the present invention;

Fig. 6 depicts a flow diagram illustrating the operations performed for extracting a structural representation from a database design in accordance with methods and systems consistent with the present invention;

Fig. 7 depicts a block diagram of a data structure with which embodiments of the present invention may be implemented;

Fig. 8 depicts an example of a structural view of a database design which has been extracted in accordance with methods and systems consistent with the present invention;

Fig. 9 depicts a flow diagram illustrating in more detail operations performed in accordance with embodiments of the present invention;

Fig. 10 depicts a flow diagram illustrating in more detail operations performed when performing the modification request operation depicted in figure 9;

Fig. 11 depicts a flow diagram illustrating operations performed when the data is prepared for displaying a structural view in a first graphical user interface corresponding to the structural representation according to methods and systems consistent with embodiments of the present invention;

Fig. 12 depicts an example of a video display displaying data prepared in accordance with methods and systems consistent with an embodiment of the present invention;

Fig. 13 depicts a flow diagram illustrating operations performed for modifying database objects in a database design in accordance with methods and systems consistent with an embodiment of the present invention;

Fig. 14 depicts a block diagram of data structures with which embodiments of the present invention may be implemented;

Fig. 15 depicts an example of a video display displaying views of a database design in accordance with methods and systems consistent with an embodiment of the present invention;

Fig. 16 depicts a flow diagram illustrating operations performed after a modification of a database object has been requested by an user in accordance with methods and systems consistent with an embodiment of the present invention;

Fig. 17 depicts an example of a video display displaying views of a database design and input options in accordance with methods and systems consistent with an embodiment of the present invention;

Fig. 18 depicts a flow diagram illustrating operations performed for updating a database design using a structural representation table in accordance with methods and systems consistent with an embodiment of the present invention;

Fig. 19 depicts an example of a video display displaying different views of database design in a first and a second graphical user interface in accordance with methods and systems consistent with an embodiment of the present invention;

Fig. 20 depicts a flow diagram illustrating operations for creating a relation between tables in accordance with methods and systems consistent with an embodiment of the present invention;

Fig. 21 depicts an example of a video display displaying different views of a database design in a first and second graphical user interface in accordance with methods and systems consistent with an embodiment of the present invention;

Fig. 22 depicts a flow diagram illustrating operations performed by creating a relation between two tables in accordance with methods and systems consistent with an embodiment of the present invention;

Fig. 23 depicts an example of a graphical user interface for displaying a view of a database design and providing an input option to the user to modify a database design in accordance with methods and systems consistent with an embodiment of the present invention;

Fig. 24 depicts a flow diagram illustrating operations performed for providing input options for selecting and modifying database objects in accordance with methods and systems consistent with an embodiment of the present invention;

Fig. 25 depicts a flow diagram illustrating operations performed for creating a new table with predefined foreign keys in accordance with methods and systems consistent with an embodiment of the present invention.

DESCRIPTIONS OF THE PREFERRED EMBODIMENTS

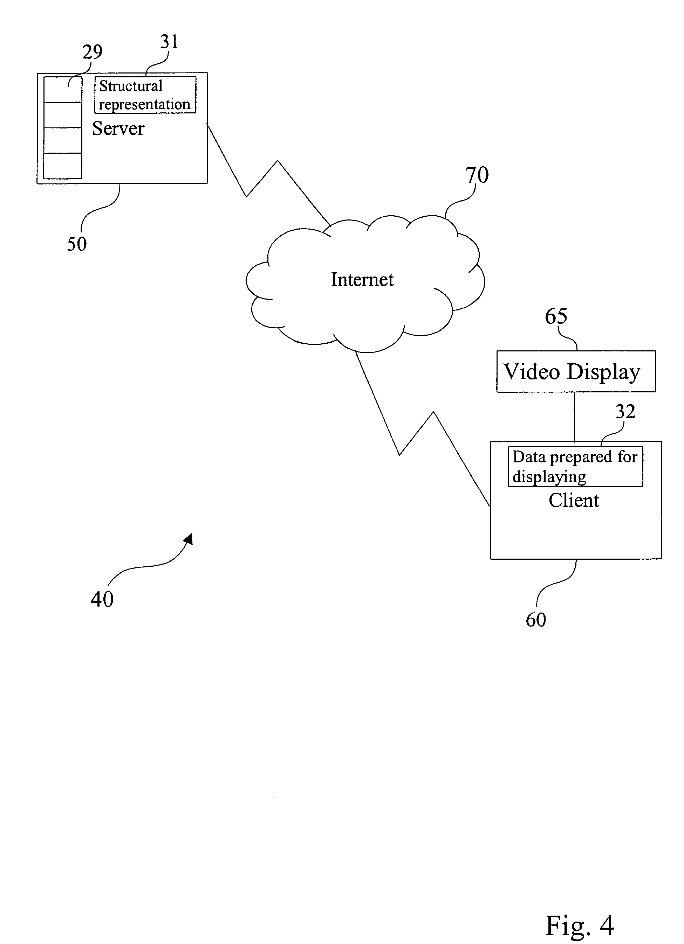

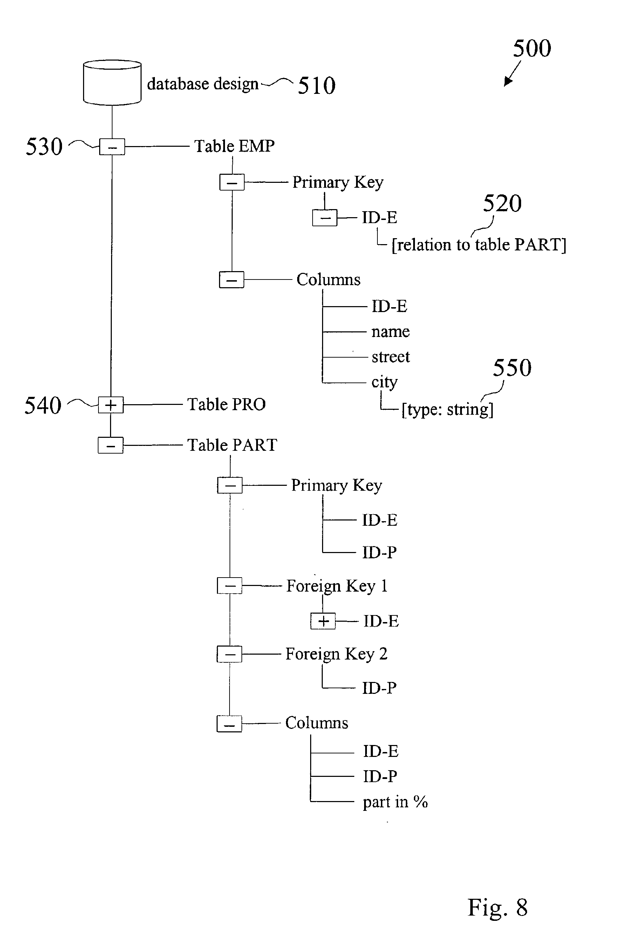

The present invention will now be described with reference to the accompanying drawings.

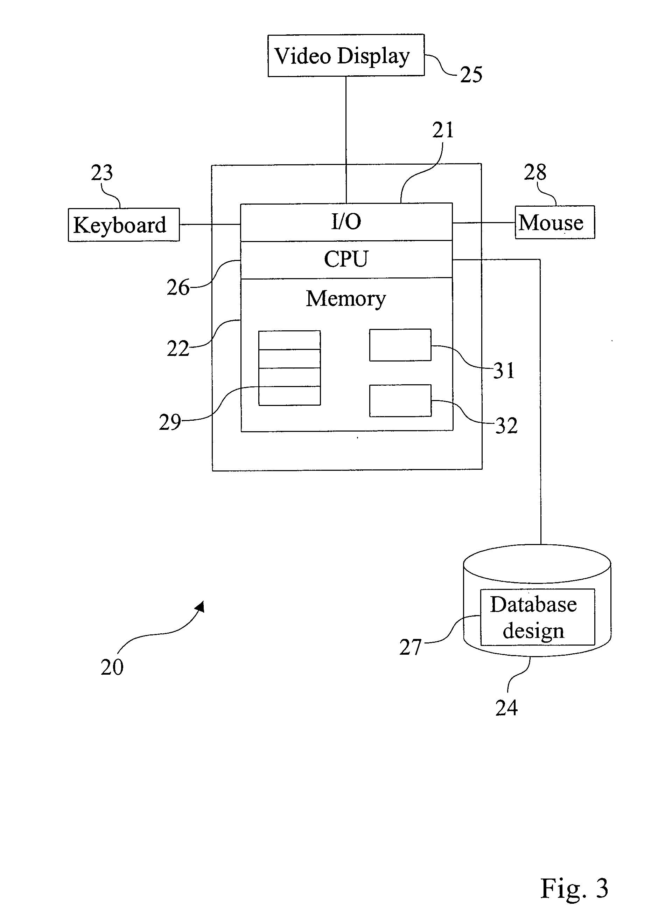

Fig. 3 depicts a block diagram of a data processing system 20 suitable for practicing methods and implementing system consistent with the present invention. The data processing system 20 comprises a processing unit (CPU) 26, and input/output (I/O) unit 21, a storage unit (memory) 22, a secondary storage device 24, and a video display 25. The data processing system 20 may further comprise standard input devices such as a keyboard 23, a mouse 28, or speech processing means (not illustrated).
The storage unit which is implemented as memory 22 in Fig. 2 contains software code portions of a computer program 29 which analyze the structure of a database design 27 which is stored in secondary storage device 24. Further software code portions of computer program 29 then extract a structural representation 31 from the structure of the database objects in the database design and prepare data 32 for displaying a structural view corresponding to the structural representation for displaying the data in a graphical user interface.
An example of the graphical user interface displaying a structural view 500 is depicted in Fig. 8 and will be described below. The structural view of the database design is viewed on the video display 25.
Although aspects of one implementation are depicted as being stored in memory 22 and secondary storage device 24, one skilled in the art will appreciate that all or part of the systems and methods consistent with the present invention may be stored on or read from either the memory 22, the secondary storage device 24, another combination of both, or from other computer-readable media, such as secondary storage devices like hard disks, floppy disks, and CD-ROMs; a carrier wave received from a network such as the Internet; or other forms of ROM or RAM either currently known or later developed. Further, although specific components of data processing system 20 are being described, one skilled in the art will appreciate that a data processing system suitable for use with methods, systems and articles of manufacture consistent with the present invention may contain additional or different components.
One skilled in the art will appreciate that methods and systems consistent with the present invention may also be implemented in a client-server environment, like one depicted in Fig. 4. Fig. 4 depicts a block diagram of a client-server-based data processing system 40 in which methods, systems, and articles of manufacture consistent with the present invention may be implemented. A client computer system 60 and a server computer system 50 are each connected to a network 70, such as a local area network (LAN), wide area network (WAN) or the Internet. A structural view of a database design is displayed in a graphical user interface on a video display 65 of the client computer system 60, while some or all of the processing as described below is carried out on the server computer system 50, which is accessed by the client computer system 60 via the network 70. In the configuration depicted in Fig. 4, the computer program 29 is carried out on the server computer 50 which extracts the structural representation 31. The data for displaying 32 is prepared or at least transmitted to client computer 60.
The design of a database is typically divided into two sub-design operations: the database table design and the database relation design. In the database table design operation a user first designs the tables with its columns and rows and then the relations between the tables are added by means of links or other means representing the links between the respective tables, e.g., by inputting a connecting line between tables in a graphical representation of the database design.

The database design as shown in Fig. 2 comprises a plurality of tables and relations. The relations are shown as lines 210 and 220 linking the tables EMP and PART, and the tables PRO and PART, respectively.

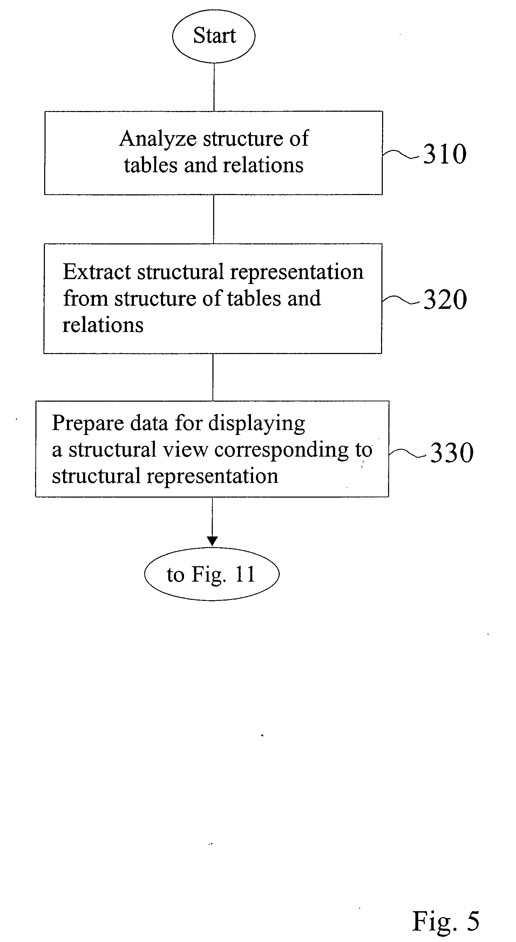

Fig. 5 shows a flowchart which illustrates a method according to an embodiment of the present invention. In operation 310, the structure of the tables and relations of a database design is analyzed for which a user wants to get structural information. For example, a database call is initiated requesting structural information of the database design stored in a database design base. An example of such a database call could be an SQL statement:

```
// for example

GET FOREIGN KEYS
```

or the like. In response to the call the requested structural information of the tables and relations are provided.

Then in operation 320, a structural representation of the database design is extracted from the structural information. In the structural representation, only that structural information is arranged in a certain order which is necessary to display the structure of the database design.

According to a particular embodiment, the extracted structural representation includes the names or labels of the tables of the database design, the names or labels of the primary and foreign keys, and all columns forming the tables. The names or labels are arranged in such a manner that it is clear which name or label represents a table, a primary key, a foreign key or columns, and which primary and foreign keys and columns belong to which table.

According to a particular embodiment the database call is assembled of a plurality of API- (application programming interface) calls issued in operation 310. These calls comprise, e.g., "get tables" instructions which request the names or labels of the tables of the database design. In further calls the names or tables of the primary and foreign keys and the columns are requested from the database design by respective "get primary key", "get foreign keys" and "get columns" instructions, respectively.

Then in operation 330 data is prepared for displaying a structural view of the database design corresponding to the structural representation extracted in operation 320. The above-described operations are typically carried out on a computer system which is connected with a storing unit storing the database design. The computer system could also be a server computer connected with a database server or the database server itself, as shown, e.g., in Fig 4. The prepared data are suitable to be displayed in a graphical user interface displayed on a display unit. Typically, the display unit is part of the computer system or, in a distributed computer system, the display unit is part of a remote user terminal. The first graphical user interface may be any graphical user interface which is known in the art to display data on a computer desktop.

According to a particular embodiment the first graphical user interface is a window or framework in which a user can survey the whole or at least the largest part of the structural view of a given database design.

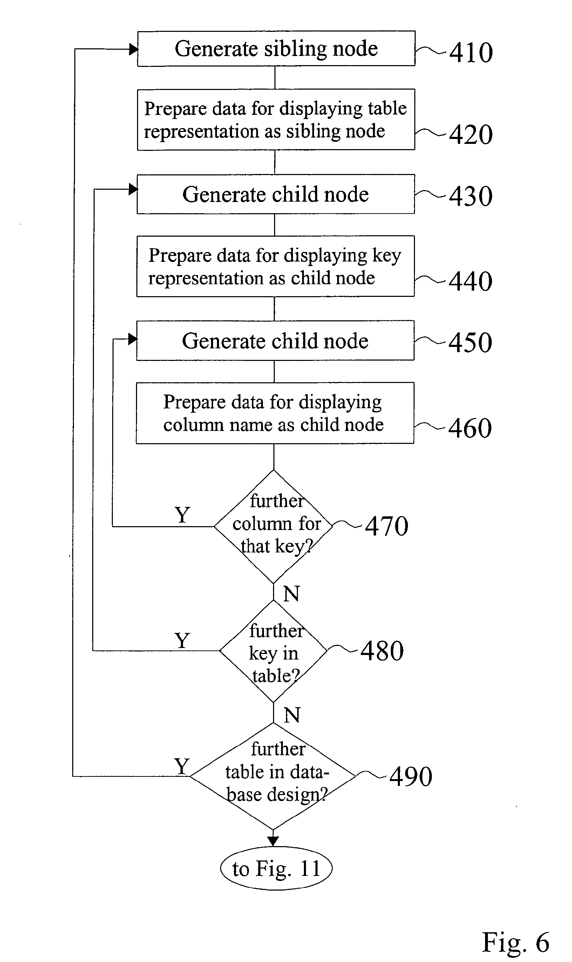

In a further embodiment of the invention, the structural view is a hierarchical tree view. The preparation of the data for displaying of the structural view in the first graphical user interface (operation 330) as a hierarchical tree view is now described in connection with Fig. 6.

In operation 410, a first sibling node for a first table of the database design is generated and then prepared for displaying as table representation in operation 420. Then in operation 430, a child node is generated to the sibling node in a next hierarchy level, and in operation 440, the child node is prepared for displaying a representation for a primary key, a foreign key or the columns of the table represented by the sibling node. In operation 450, there is generated a child node to the child node generated before in a next hierarchy level. The newly generated child node is then prepared for displaying in operation 460 as a grand child node representing the column name of the parent child node generated and prepared for displaying in operations 430 and 440. In this respect and according to the present invention, a child node may be displayed as a parent child node having grand child nodes which again have great-grand child nodes and so on. Thus, the hierarchical tree view may have multiple or additional levels as seen depicted in Fig 8.

In operation 470, it is then checked whether further columns for that key exist. In this respect, key stands for a primary key, a foreign key or the columns representation generated in operation 430. If there is a further column for that key operations 450 and 460 are repeated generating a further child node to the key representation node and preparing data for displaying the node in the hierarchical tree view. If no further column for that key exists all column names exist as child nodes to the respective key node (primary key, foreign key or columns representation node) in the hierarchical tree view.

In operation 480, it is then checked whether there is a further key in the table generated last. This means that this operation checks whether along with a primary key there is also a foreign key, or whether along with a foreign key already generated and prepared for displaying there is also another foreign key, or whether along with the primary and foreign keys there is also a representation for the columns of the present table which has not yet been generated and prepared for displaying. If there is a further key or column, then operations 430 and 440 are repeated and a further child node is generated and prepared for displaying a representation of that key or column which has not yet been prepared for displaying in the hierarchical tree view. Then in the next hierarchical level, the representations of the column names forming the present key are generated and prepared for displaying as already described with respect to operations 450 and 460. If no further key exists in that table, which indicates that no further child node as representation of primary and foreign keys or representation for the columns of the present table has to be prepared for displaying, then it is turned to operation 490.

In operation 490, it is then checked whether there is a further table in the database design. If there is a further table, then a new sibling node is generated and prepared for displaying in the hierarchical tree view as already described with respect to operations 410 and 420. The child nodes and child-child nodes are generated and prepared, as already described with respect to operations 430 to 480, for the newly generated and prepared table representation node. If no further table is in the database design, then the hierarchical tree view has been completed for the analyzed structure of the database design and the corresponding data have been prepared for displaying in the first graphical user interface.

According to a further embodiment, first a sibling node is generated for each table in the database design and prepared for displaying as table representation node in the hierarchical tree view. Then all child nodes representing primary and/or foreign keys and the columns representation of the respective tables are generated as child nodes and prepared for displaying in the next hierarchical level in the hierarchical tree view. In the next step, the child nodes to the respective key representing the column names for each of the primary key, the foreign key and the column nodes are generated and then prepared for displaying in the next hierarchical level in the hierarchical tree view.

According to a further embodiment, the database design also includes catalogs and schemes which shall also be displayed in the first graphical user interface. In a scheme parts of a database design are summarized which, e.g., are only accessible or processed by a certain user. In a catalog, there are tables or even schemes summarized forming a sub-database design. If schemes and catalogs exist in the database design, representations of these catalogs and schemes are prepared for displaying as parent nodes to the table nodes in the hierarchical tree view.

According to still another embodiment, the structural representation of the database design which has been analyzed and extracted from database design base further includes information about properties of every object in the database design. In this respect every catalog, scheme, table, primary or foreign key, or column represented by a node in the hierarchical tree view can be seen as a database object. For a property of a database object which shall be displayed in the hierarchical tree view a further child node to the node of the respective database object is generated and prepared for displaying as property representation in the first graphical user interface. Furthermore, for each property representation node a further child node representing yet further information could be generated and prepared for displaying. For example, relations between tables could be displayed in the first graphical user interface as property representation nodes to the foreign keys indicating to which key in which table the foreign key relates.

According to another embodiment, type information of the primary and foreign keys and the further columns shall be displayed as property nodes to the respective key or column node in the graphical user interface. The type information is normally stored in the database design base together with other known property information for each key or column and are typically displayed only in the database table design view. Possible types of keys or columns are, e.g., "graphic", "integer", "character", "numeric" or "string" defining the data type of the attribute stored in that key or column.

According to an embodiment of the present invention, the extracted structural representation of the database design is stored as a data structure in a computer-readable memory device. The computer-readable memory device may be a memory like a ROM or RAM, either currently known or later developed, or a secondary storage device, like a hard disk, a floppy disk, or a re-writable CD-ROM, a carrier wave received from a network such as the Internet, or any other memory device suitable for storing data structures.

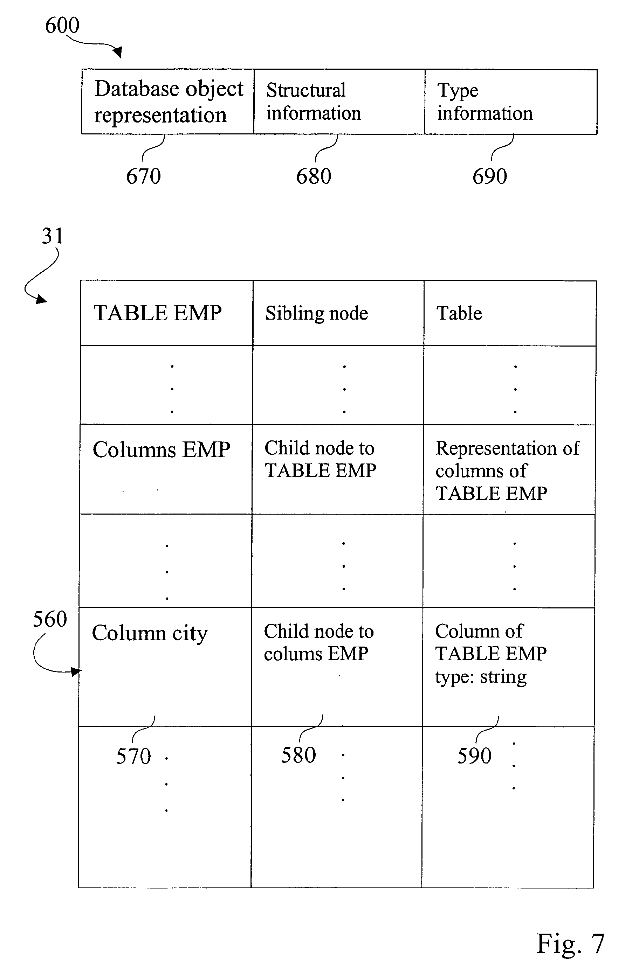

Referring back to Fig. 3, the memory 22 comprises a data structure 31 having entries reflecting structural representations of database objects in the database design 27. Fig. 7 depicts a more detailed diagram of that data structure 31. The sample data structure 31 that is depicted in Fig. 7 reflects a small part of the structural representation of the database design depicted in Fig. 2. The data structure has entries as rows. In Fig. 7, entry 600 depicts the structure of the entries having three cells across a single row. The first cell 670 reflects the name of the database object of which a structural representation is stored in this entry. Next cell 680 reflects the structural information for the database object which means that the information in this cell defines to which node the node of the database object in this entry is a sibling node or a child node. Cell 690 reflects type information and/or other relevant information of the database object stored in this entry. Type information, for example, is the indication whether the database object of this entry is a table, or primary or foreign key, or column and, if the data object is a column, the type of the data stored in this column. According to further embodiments of the present invention, further information, e. g., properties of the database object may be reflected by this cell. Each entry in data structure 31 in Fig. 7 is configured like entry 600 and the entries constitute a structure representation table. Entry 560 depicts the structural representation for column "city" in table EMP. Cell 570 comprises the name of this database object: "column city". The content of cell 580 indicates that in the database structure the representation of the database object "column city" is defined as child node to the node "columns EMP" and that in the structural view column city will be displayed as child node to the node representing table EMP. Cell 590 comprises that the database object in this entry is a column of Table EMP and the data in this column are of the type: "string". In the computer-readable memory device, each entry of the data structure comprises for each of its three cells a storage area in which the content of each cell is stored.

Now the type information may be displayed together with other information not present in, e.g., the database table design view. The combined display of type information and relation information as property nodes in the hierarchical tree view supports the user in the relation design by providing all information necessary to design a relation between keys of the same type.

In Fig. 8, an example of a hierarchical tree view to be displayed in the first graphical user interface is shown. The displayed hierarchical tree view corresponds to the database design shown in Fig. 2. In the hierarchical tree view, a root node 510 represents the database design as a whole. The tables of the database design are represented by the sibling nodes "table EMP", "table PRO" and "table PART". In the next hierarchical level, child nodes for the primary key, the foreign keys, and the columns of the respective tables are displayed. For example, the sibling node "table PART" has the child nodes "primary key", "foreign key 1", "foreign key 2" and "columns". In the next hierarchical level, nodes representing the column names forming the respective keys are displayed for the key nodes. For example, the columns of the table EMP are ID-E, Name, Street and City and are represented by child nodes to the column node "columns" of the same name as the columns themselves.

In still a further hierarchical level, the column name node "ID-E" to the primary key node of the table EMP has a further child node 520 as shown in Fig. 8. This node is a property node symbolizing the relation between the tables EMP and PART, and it corresponds to line 210 in Fig. 2 representing the same relation.

Another property node 550 to the column name node "city" of table EMP indicates the type "string" of the attribute stored in this column.

According to another embodiment which allows a user to easily navigate through the hierarchical tree view of the database design, the hierarchical tree view may contain an indication for the individual nodes and displayed in connection with them as to whether they contain any child nodes or not. This, for example, can be implemented in analogy to the well-known file managers, such as the "explorer", and as it is, e.g., schematically illustrated in Fig. 8. For those table, key or column name representations which contain a child node, e.g., before the table representation node "table EMP" itself, a little box 530 is displayed which contains either a plus or a minus sign. A minus sign as displayed in box 530 then means that there is at least one child node in the next hierarchical level which is already displayed as a child node. In the case of table representation node "table EMP", the already displayed child nodes are the key representation nodes "primary key" and "columns". If the box containing a minus sign were pressed by, e.g., a mouse button, then the part of the hierarchical tree view under the table node representation "table EMP" would be compressed such that the key representation nodes "primary key" and "columns" together with their child nodes would disappear and would be incorporated into the table representation node "table EMP". An example of such a compressed node can be seen in Fig. 8 when looking at the table representation node "table PRO". The little box 540 before the table representation node "table PRO" contains a plus sign which means that all child nodes to the table representation node "table PRO" are compressed and incorporated into that node. By pressing the plus sign in box 540 the hierarchical tree view would then be expanded and two child nodes labeled "primary key" and "columns" would be displayed in the next hierarchical level with a little box before containing a plus sign. For those nodes which do not have any child nodes the box could be empty or there would simply be no box displayed as shown in Fig. 8, e.g., before property node 520.

The implementation of such a kind of display indication is straight forward for the person skilled in the art being familiar with the generation of implementing, e.g., graphical file managers, such as the well-known "Explorer".

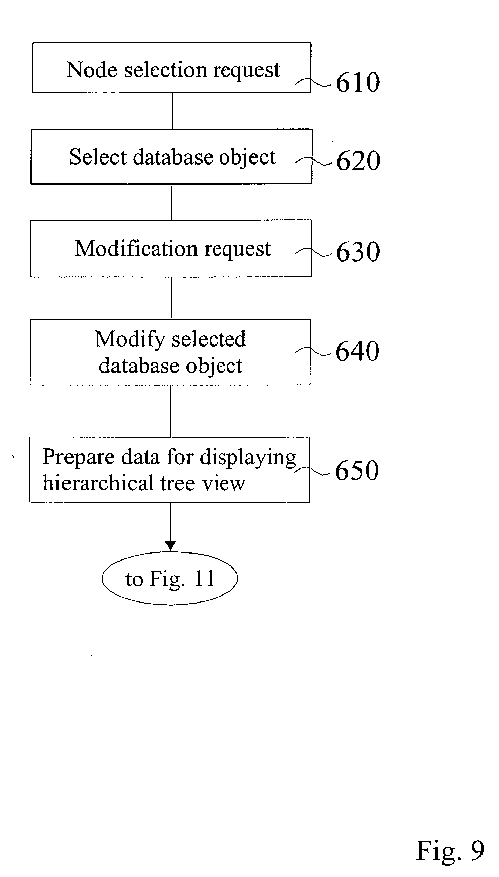

A yet further embodiment of the present invention will now be explained in connection with Fig. 9.

According to this embodiment a user is able to modify the structure of the database design by modifying the hierarchical tree view in the first graphical user interface.

For that purpose, the user can input a node selection request in operation 610. This selection request is carried out, e.g., by positioning a mouse pointer over a node in the hierarchical tree view and pressing a mouse button. The selection of the node can be indicated by marking the selected node.

After one or more nodes in the hierarchical tree view have been selected by a user, the corresponding database objects are selected in the database design in operation 620 which means, for example, that a query request is sent from the processing unit 26 of Fig. 3 to the database design base 27 to fetch that database objects. The fetched database objects are then stored in memory 22. Thus, the user can access a database object by selecting database object representation node in the first graphical user interface.

After one or more database objects have been selected and stored in memory, the user can input a modification request in operation 630 to determine how the selected database objects should be modified. The node selection request and the modification request can be combined in a such manner that together with the selection of a node in the first graphical user interface the user inputs the kind of modification he or she wants to carry out by means of a further mouse click or pressing a key on a keyboard. In a similar manner, after a node has been selected a pop-up or pull-down menu could be displayed in or beside the first graphical user interface offering a selection of possible modifications to the selected database object. The user then can choose one of these modifications to be carried out on the selected database object in operation 640.

After the modification has been completed, in operation 650 an update of the hierarchical tree view is prepared for displaying in the first graphical user interface taking the modification in the database design into consideration.

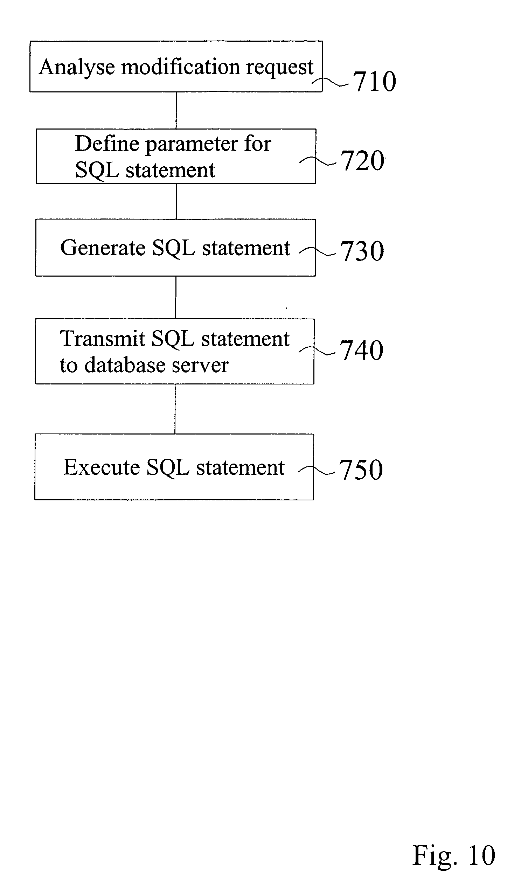

In connection with Fig. 10 it will now be explained how the selected database object is modified.

In a first operation 710, the modification request input by a user is analyzed and the respective modification instruction to be carried out is extracted. The modification instruction, for example, is typically a database query instruction as known from the so-called "structured query language (SQL)". The instruction format of a SQL instruction or statement typically consists of a command statement and a parameter of which the command statement is applied. Depending on the instruction, the parameter required to carry out that instruction is determined. For example, the parameter is a name of a table with further properties like its columns or keys. According to an embodiment of the present invention, the parameter is or is a part of the database object selected in operation 620. If the modification instruction is a delete instruction, the parameter is the database object, e.g., a column in a table which is to be deleted from the database design. This parameter to be used in connection with the modification instruction is then obtained from the memory where the selected database object is stored.

In the next operation 730, a complete SQL statement is put together. A command statement corresponding to the selected modification request (operation 630) is selected. The selection may be done, for example, by choosing a command statement from a command statement list which corresponds to the modification request selected from the pop-up or pull-down menu described with respect to operation 630. Then, this command statement is put together with the parameter defined in operation 720. The so sampled SQL statement is compatible to the SQL standard and corresponds to the SQL statement structure known in the art. The SQL statement is then transmitted to the database server in operation 740 and executed in operation 750 as any other known SQL statement which is transmitted from a database client to the database server for execution. As a result, the modification request issued by , e.g., a mouse click in the graphical user interface is executed as SQL statement and has modified the database design stored in the database design base.

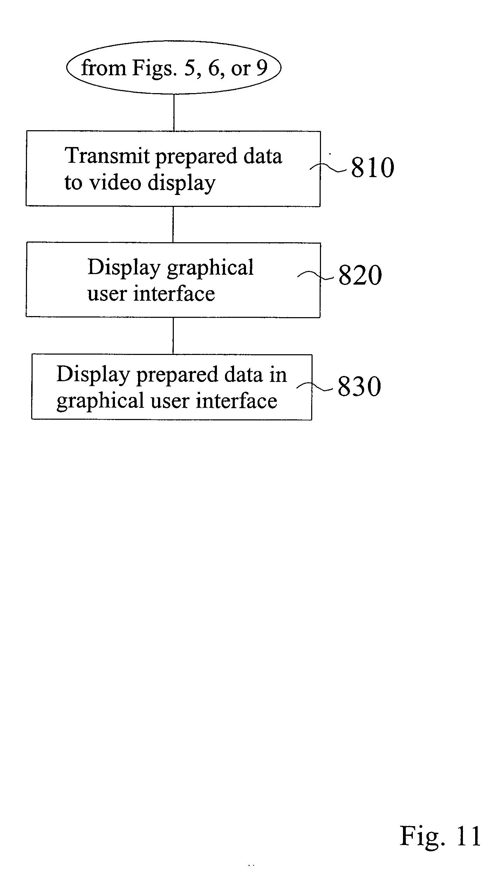

According to the embodiment now described in connection with Fig. 11, the data prepared for displaying in operation 330, 420, 440, 460 and 650 are displayed in a graphical user interface on the video display 25.

The prepared data is first transmitted to a display unit in operation 810. In this respect, the display unit can either be the monitor with its control logic of a computer on which the database design is processed and also displayed or the display unit is part of a remote user terminal which is connected to the database server via a connection line or, e.g., the internet.

On the display unit it is then displayed a graphical user interface in operation 820. The graphical user interface is typically a window or a framework on a computer desktop in which the data prepared for displaying shall be displayed. In operation 830, the data prepared for display are then displayed in the graphical user interface to the user. Now the user can see the structural view of the database design on his computer monitor.

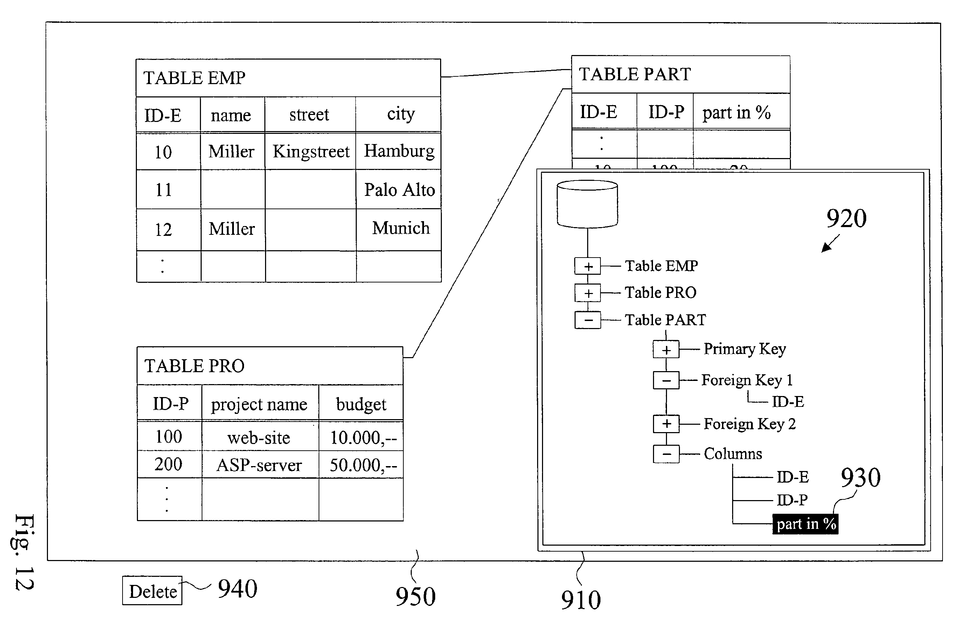

An example of a modification of a database object will now be described with reference to Figs. 12, 13, 14 and 15.

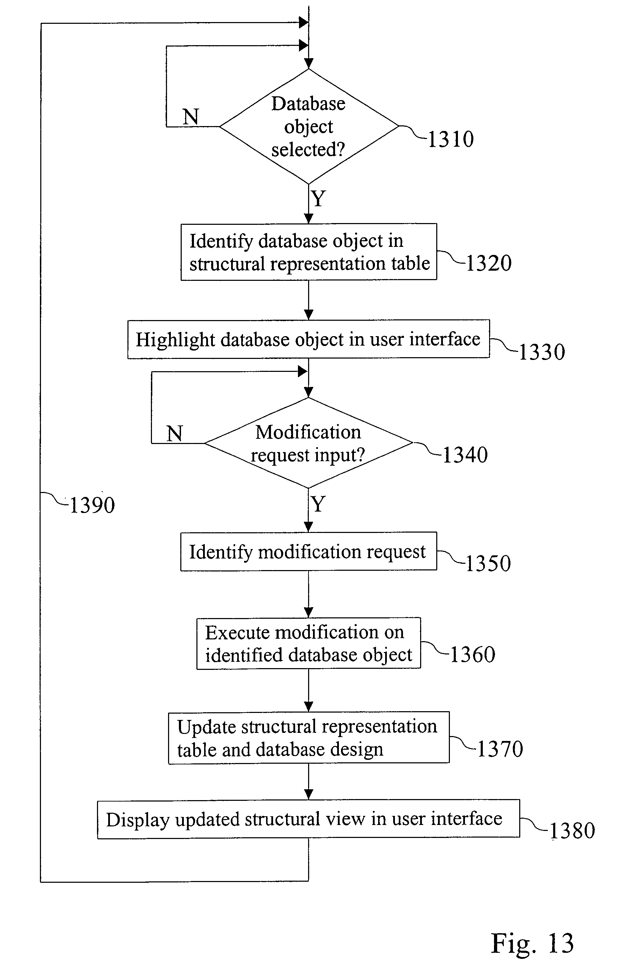

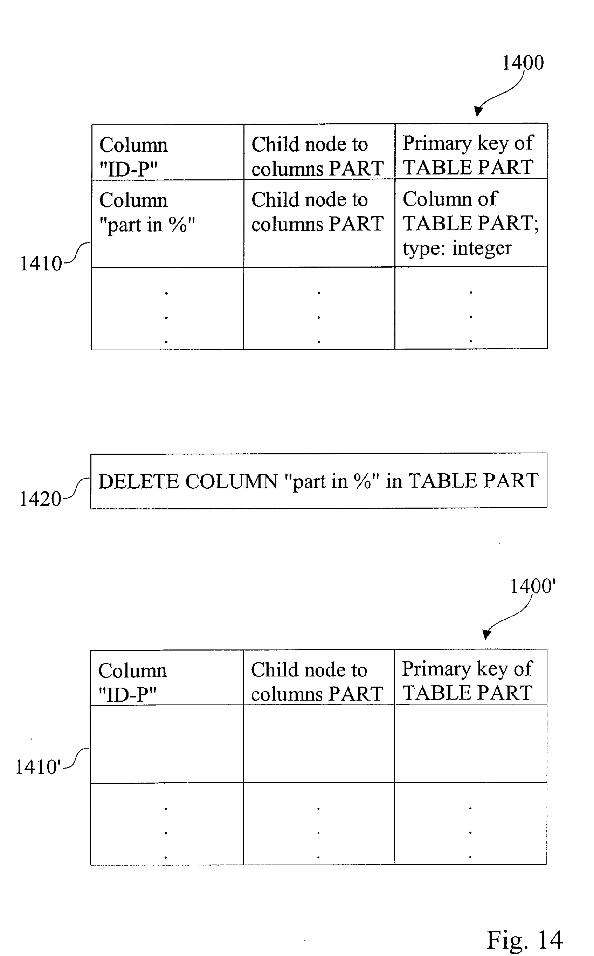

In Fig. 12, a hierarchical tree view 920 representing a part of a structural view of a database design is displayed in the first graphical user interface 910 on a video display. In another underlying window, a table view 950 of the database design is displayed. According to a method of the present invention, a modification of a database object can be carried out by selecting that database object in the first graphical user interface and then inputting a respective modification request by a user. The method will now be described with reference to the flow chart depicted in Fig. 13. In a first decision operation 1310, it is checked whether a database object representation node in the first graphical user interface has already been selected. A user selects a database object by, e.g., mouse clicking the respective node of a database object in hierarchical tree view 920. If the selection of the database object has been recognized in operation 1310, the database object is identified in the structural representation table (operation 1320) and highlighting in the first graphical user interface (operation 1330). Fig.12 depicts a situation where column "part in %" of table PART has been selected by mouse clicking the respective column representation node 930 and, in response to operation 1330, node 930 is highlighted in first graphical user interface 910 in Fig. 12. Operation 1320 comprises that the selected database object is identified in the structural representation table 1400 in Fig. 14. Structural representation table 1400 corresponds to the structural representation 31 in Fig. 7. Entry 1410 in structural representation table 1400 represents the selected database object and is identified by, e.g., setting a flag or a pointer to that selected entry 1410.

In the next operation 1340, it is checked whether a modification request has already been input by a user. For example, if the user now wants to delete the selected database object which is highlighted in the first graphical user interface 910, the user inputs a delete request by mouse clicking the delete button 940 in Fig. 12. Then, operation 1340 branches out to operation 1350 and the modification request is identified as deletion request in operation 1350. The deletion request is then executed as described above with reference to Fig. 10.

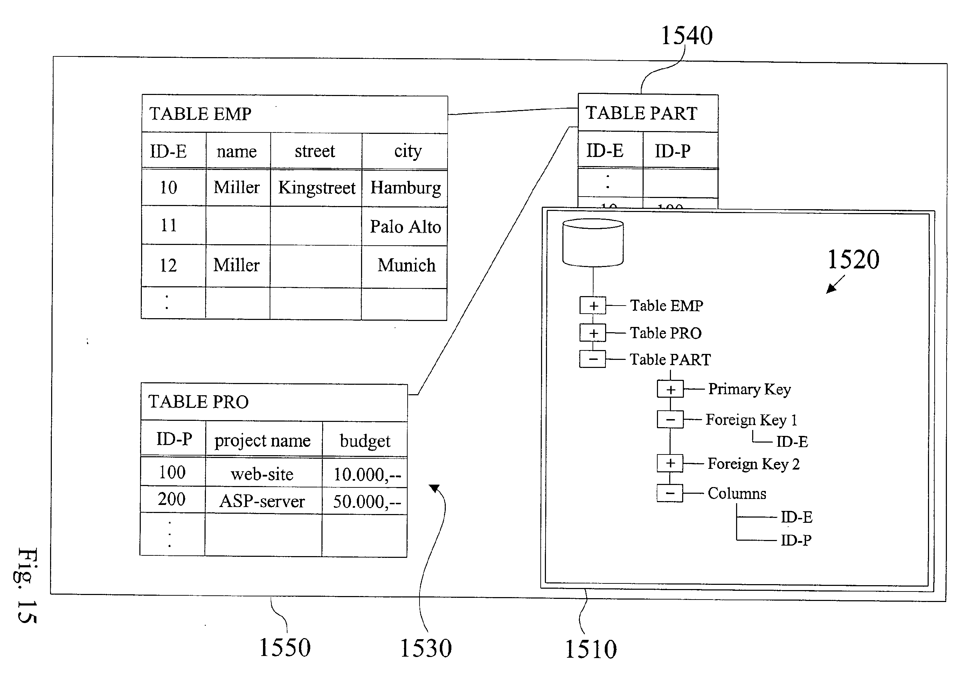

In Fig. 14, a command statement 1420 for deleting the selected database object is depicted. The instruction word "DELETE" is selected from an instruction set, e.g., the .SQL instruction set corresponding to the modification request identified in operation 1350. The parameters for the command statement 1420 are extracted from selected entry 1410 which was selected by a flag or pointer. Then, in operation 1360, command statement 1420 is executed as modification request on the identified database object. The structural representation table 1400 and the database design 27 is then updated by the result of the execution operation in operation 1370. Fig. 14 depicts the updated structural representation table 1400' with updated entry 1410' which is now empty because the modification request was a delete request. Thus, the column "part in %" has been deleted from the structural representation. At the same time, the database object has also been deleted from the database design 27. The updated structural representation 31 is then displayed (operation 1380). The updated first graphical user interface 1510 is depicted in Fig. 15 in which the hierarchical tree view 1520 now has only the two columns "ID-E" and "ID-P". Since also the database design 27 has been updated in operation 1370, also the table view 1530 shows an updated table PART 1540 with two remaining columns ID-E and ID-P.

According to an embodiment of the invention, different modification requests are implemented in order to allow the user to design a database by inputting these modification requests 630 in the first graphical user interface. Such modification requests are known in the art, e.g., from file managers in operation systems to allow a user to modify files in a file system by creating, moving, deleting, copying, etc. of folders and files. For example, a user may input respective modification requests into a graphical user interface displaying a file structure as known, e.g., from the known file manager "Explorer". Embodiments of the present invention implement the feature to create, amend, move, copy, delete, and hide database object representation nodes in the hierarchical tree view displayed in the first graphical user interface, and thus modify the respective database objects in the database design base. For example, after the DELETION command is executed as described with reference to Figs. 12 to 15, a further modification command may be input by the user, and the method described with reference to Fig. 13 is repeated as indicated by arrow 1390 with a new database object and a new modification request, e.g., a CREATE command to create a new column in table PART.

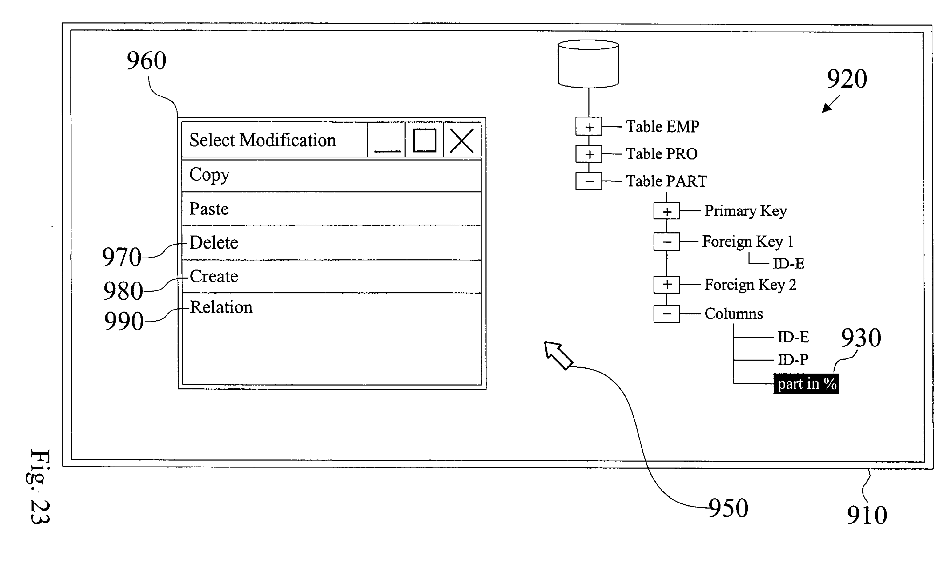

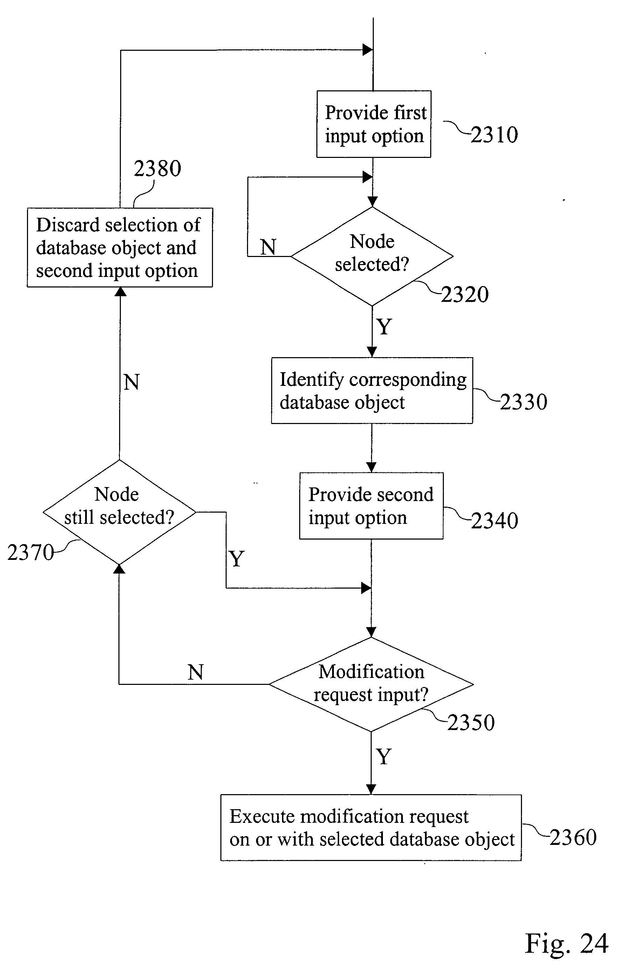

According to another embodiment, which will now be described with reference to Figs. 23 and 24, input options are provided to the user enabling the user to input different requests. So according to a first input option, the user is enabled to select a database object, and according to a second input option, the user may issue a modification request in order to modify the selected database object. In particular, the first input option enables the user to select a database representation node in structural view 920 displayed in the first graphical user interface as depicted in Figs. 23 and 24. A first input option is provided in operation 2310 which is implemented by mouse-sensitive representation nodes in structural view 920 as already described with reference to Figs. 12 and 13. Thus, if the user moves the mouse pointer or cursor over a representation node, e.g., column node "part in %" in window 910, the respective representation node is selectable by a mouse click. In operation 2320, it is checked whether such a mouse click was input by the user and the respective representation node has been selected. If a node has been selected, decision operation 2320 branches to operation 2330 in which the database object is identified which corresponds to a selected representation node. Additionally, the selection of a database object may be indicated by highlighting its corresponding representation node (operation 1330) and as shown for column node "part in %" 930 in Fig. 23. After selection of the database object, a second input option is provided in operation 2340. In Fig. 23, menu box 960 is provided as second input option. Further possible input options are context menus, menu bars, pop-up or pull-down menus, etc., pp. in which the user can select and input request or a command line window in which the user can type in a modification command. Menu box 960 provides different modification requests as selectable buttons, e.g., DELETE request button 970, CREATE request button 980 and RELATION request button 990. Such a request button may branch out to further sub-requests as it is known from the state-of-the-art graphical user interfaces. For example, RELATION request button 990 as indicated by the arrow ">>" may branch out to buttons "create relation", "delete relation", "show relation", or the like. After a modification request is input by selecting one of the request buttons in menu box 960 decision operation 2350 branches to operation 2360 in which the modification request on or with the selected database object is executed. This includes the identification of the modification request (operation 1350) and also the already described updating and displaying operations 1370 and 1380. If no modification request is input, operation 2350 branches to operation 2370 in which it is checked whether the selected representation node is still selected. If this is the case, operation 2370 branches back to operation 2350 awaiting a modification request input from the user. Otherwise, decision operation 2370 branches out to operation 2380 in which the selection of the database object and the second input option is discarded and then, again the first input option is provided in operation 2310.

For example, if the user moves the mouse pointer 995 to a position outside the menu box 960 as shown in Fig. 23 and inputs a mouse click at this position, in operation 2370, it would be decided that the selected column node "part in %" is not selected any more and menu box 960 would then be removed from the first graphical user interface 910.

In a further embodiment, a second graphical user interface is displayed which provides a further view of the database design of which a structural view is already displayed in the first graphical user interface. Examples of different embodiments providing more than one graphical user interface will now be explained with reference to Figs. 12 to 18.

The first graphical user interface is a first window 910 in which the hierarchical tree view 920 is displayed. The second graphical user interface is a second window 950 in which a table view displaying the tables and relations of the database design is displayed. In Figs. 12, 15 and 17, the first window overlaps the second window and the first window is implemented as a so-called floating window which is known, for example, from the Apple Macintosh Window Manager. Thus, the first window can be moved relative to the second window on a desktop and both the first and the second window can also be minimized or maximized, as is well-known from window-oriented graphical user interfaces.

With respect to Figs. 12 to 15 the deletion of the column "part in %" has already been described. In response to the deletion request, the database design 27 has also been updated in operation 1370 by deleting the selected database object in the database design. Then, the second graphical user interface 1550 displaying a table view of the database design is also updated, as it is known from the art that a table view of a database design is updated after a modification request has been completed. As a result, also in the second graphical user interface 1550, the table view 1530 depicts table PART 1540 with only two the columns ID-E and ID-P. Thus, not only the hierarchical tree view 1520 in the first window 1510 is brought into conformity with the modified database design, but also the table view 1530 in the second window 1550 is updated in the same manner.

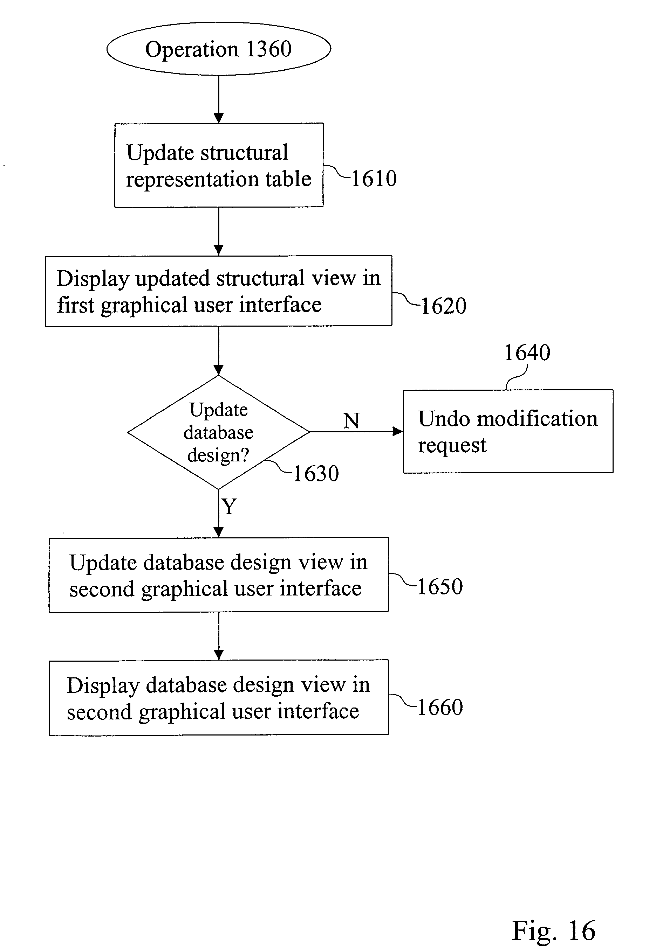

This principle of bringing the different views of the database design into conformity with the database design guarantees that after a modification operation is completed all views in all windows display the current database design. However, according to a user request one or more views in a graphical user interface could be frozen in order not to update the view of the database design and to displayed and outdated database design version as it will next be described with reference to Figs. 16, 17 and 18. The frozen database design view can then be updated at a later point in time upon user request, e.g., after the user has made sure that he really wants to change the database design.

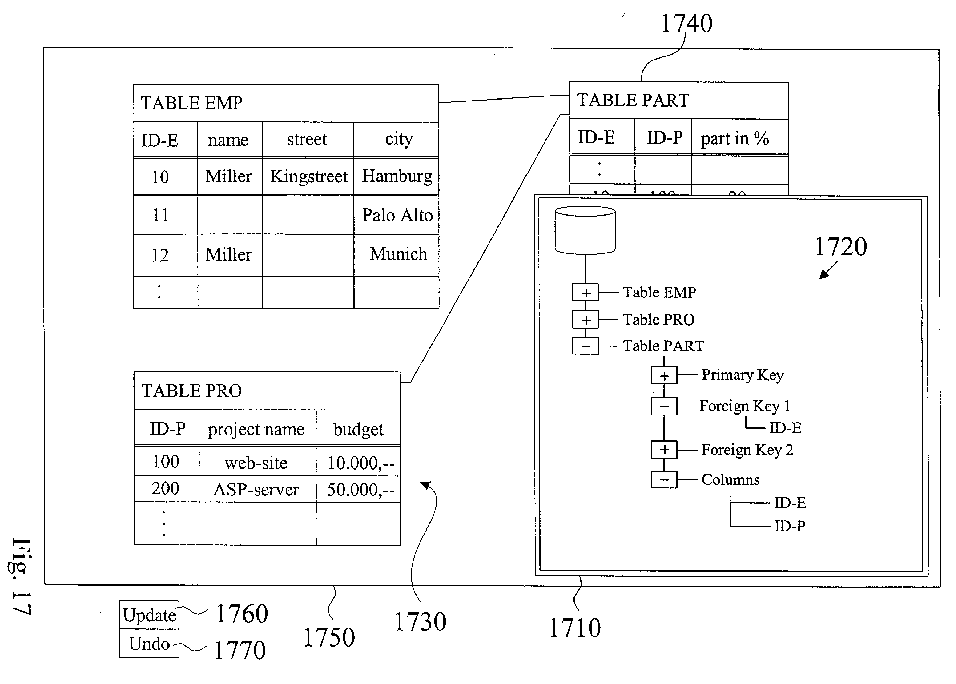

According to an embodiment of the present invention, the processing of a modification request after operation 1360 in Fig. 13 is further processed as it will now be described with reference to Fig. 16. In operation 1610, only the structural representation table 1400 is updated with the result of the command statement executed in operation 1360. Similar to operation 1380 in operation 1620, a structural view corresponding to the updated structural representation table is displayed in first graphical user interface. This situation is depicted in Fig. 17 showing a first graphical user interface 1710 in which a structural view 1720 is displayed in which the column "part in %" of table PART is removed whereas in second graphical user interface 1750 a table view 1730 is shown in which in table PART 1740 column "part in %" is still present. As depicted in Fig. 17, two input options 1760 and 1770 are provided to the user. With input option 1760 "Update", the user can update the database design by the modification which has already been executed and displayed in structural view 1720. If the user does not want to take over the modification in structural view 1720, he can choose the input option 1770 "Undo" with which the modification request can be cancelled. This decision of the user is analyzed in operation 1630 resulting in either operation 1640 which undoes the modification request or resulting in operation 1650 in which the database design is updated by the modified structural representation table. Both input options 1760 and 1720 can be selected, for example, by mouse clicking either the Update or the Undo button in Fig. 17. If the user clicks on Undo button 1770, he will see again the structural view 920 in first graphical user interface 910 as depicted in Fig. 12. In the other case, if the user clicks on the update button 1760 in Fig. 17, after operation 1650 the updated database design view 1530 is displayed in second graphical user interface 1550 in Fig. 15.

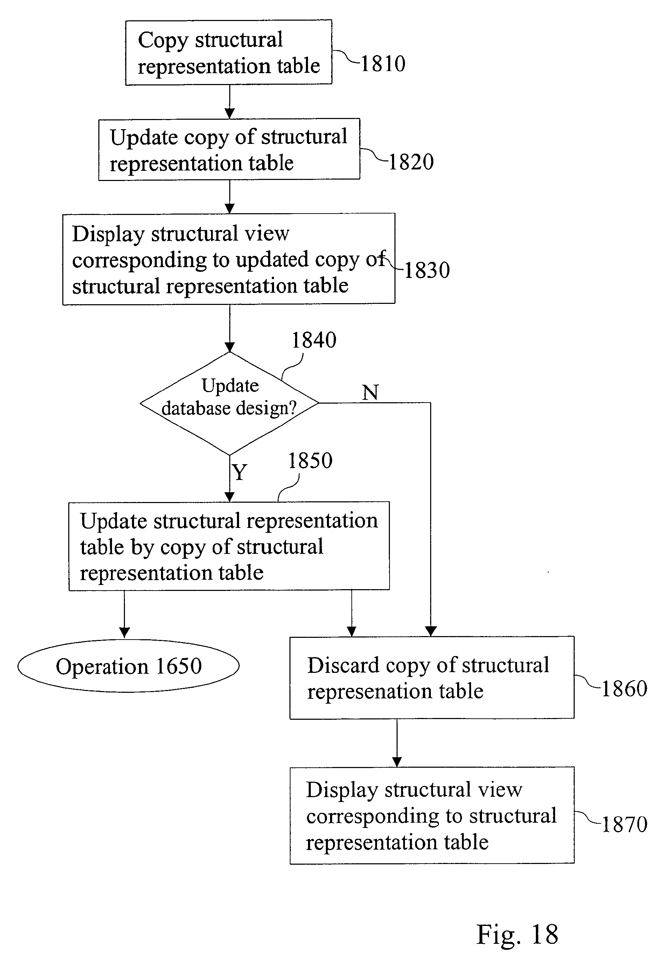

In Fig. 18, an even more detailed flow chart of the updating procedure in accordance with an embodiment of the present invention is depicted and will now be described. Operation 1810 starts after the modification request is identified in operation 1350. In operation 1810, the structural representation table 1400 is copied and the execution of the modification request (operation 1360) and the following updating is only executed on the copy of the structural representation table in operation 1820. Then, similar to operation 1620, the updated copy of the structural representation table is displayed in operation 1830. In operation 1840, it is again analyzed whether the user wants to update the database design with the modified data structure in the structural representation table, or whether the user wants to cancel this modification. If the user inputs that the modification is to be cancelled, the updated copy of the structural representation table is discarded in operation 1860 and in operation 1870 a structural view corresponding to the structural representation table is displayed in first graphical user interface. In this case, the structural representation table remains unchanged. If the user inputs an update request in response to operation 1840, the structural representation table is updated by the copy of the structural representation table in operation 1850. Thus, in this case the structural representation table has been changed and the further update procedure which includes update of the database design and the database design view in second graphical user interface is carried out in accordance with operation 1650 and 1660.

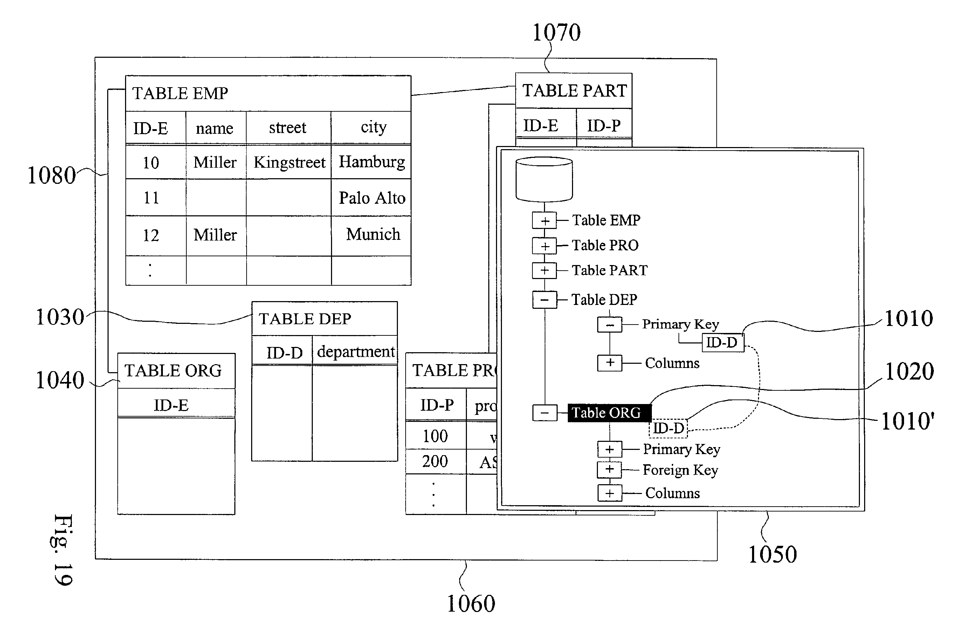

In Fig. 19, as a further example, the first and second windows 1050 and 1060 depict different views of the database design after the deletion of the column "part in %" in the table PART has been completed, the database design is updated and both windows received an update of the prepared data for displaying either directly from the database design or via the structural representation table.

To freeze a view of the database design, it is also possible to postpone either the transmission of the prepared data for displaying in operation 810 or the displaying itself in operation 830 in Fig. 11. In the latter case, the transmitted data prepared to display is stored in an intermediate memory and is displayed only after a request to update the view in the frozen database design view is received. However, the database design has already been updated in that both cases and a recall of the old version of the database design is harder to achieve by canceling the change of the database design.

According to an embodiment of the present invention, a method is provided to create a relation between two tables in the database design based on a drag-and-drop operation issued by a user in the first graphical user interface.

In Fig. 19, two different views of the database design of Fig. 2 having two additional tables ORG and DEP are depicted. In first window 1050, a hierarchical tree view of the database design is displayed with representation nodes or the added tables DEP and ORG and their keys and columns. In second window 1060, a table view of the same database design including the added tables DEP 1030 and ORG 1040 are displayed. For example, these new tables are created by using a method according to the present invention which is described with reference to Fig. 13 with a "new table" as selected and identified database object (operations 1310 and 1320) and with a "create"-input as input and identified modification request (operations 1340 and 1350). The modification request executed in operation 1360 to create new tables 1030 and 1040 is a single SQL command statement for each table:

> CREATE TABLE DEP (ID-D int primary key, type; ....)
> CREATE TABLE ORG (ID-E int primary key, type)

In Fig. 19, table DEP 1030 has a primary key ID-D and a further column "department". In the example, table DEP lists all departments of the company with a uniquely identifying number in the first column "ID-D" and the department name in the second column "department". Table ORG 1040 has only one column labeled "ID-E" as its primary key column. Primary key "ID-E" is also a foreign in table ORG since the attribute "ID-E" has already been assigned as primary key in table EMP and thus relation between tables EMP and ORG is depicted in second window 1060 by line 1080 representing this relation.

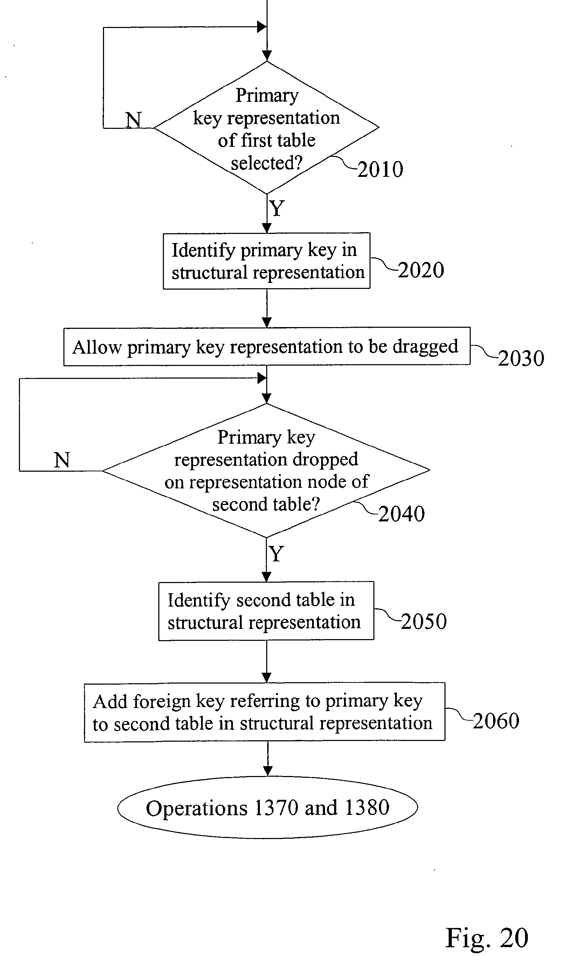

If at this point the user also wants to create a relation between tables ORG and DEP implementing that each employee of the company relates to a department of the company, then an embodiment of the present invention enables the user to create this relation by a drag-and-drop operation of the user in the first graphical user interface. A method according to this embodiment will now be described with reference to Fig. 20. In operation, 2010 it is analyzed whether a primary key representation of a first table has been selected in the first graphical user interface. Referring back to Fig. 19, primary key representation node 1010 has been selected by, e.g., a mouse click on the respective node in the first graphical user interface 1050. Thus, operation 2010 branches to operation 2020 and the corresponding primary key is identified in structure representation of the database design. In a next operation 2030, the first graphical user interface 1050 provides a functionality which allows a user to drag the selected primary key representation node 1010 within the window of the first graphical user interface. It is then analyzed in operation 2040, whether the dragged primary key representation is dropped on a representation node of a second table. The dragging operation is depicted in first graphical user interface 1050 by the dotted line on which a copy of the selected primary key representation node 1010' has been dragged. In Fig. 19, a situation is depicted in which the copy of the selected primary key representation node 1010' is in touch with a representation node of a second table, namely table ORG which is highlighted to indicate that the primary key representation node can now be dropped on this table if the user wants to create a relation between table DEP and ORG. If the primary key representation node is dropped on the position shown in Fig. 19, decision operation 2040 branches to an operation 2050 and table ORG as second table is identified in the structural representation. In a next operation 2060, the primary key of the first table, namely table DEP, is added as a foreign key to table ORG. In the structural representation, this is done by, e.g., copying the identified primary key (operation 2020) and paste this copied entry as a new entry for the new foreign key of table ORG in the structural representation table. A corresponding SQL statement which is executed in operation 2060 is:

ALTER TABLE ORG FOREIGN KEY (ID-D) references (DEP, ID-D)

The operations to follow operation 2060 are identical to operations 1370 and 1380 to update also the database design and to display at least one updated structural view of that database design in a graphical user interface.

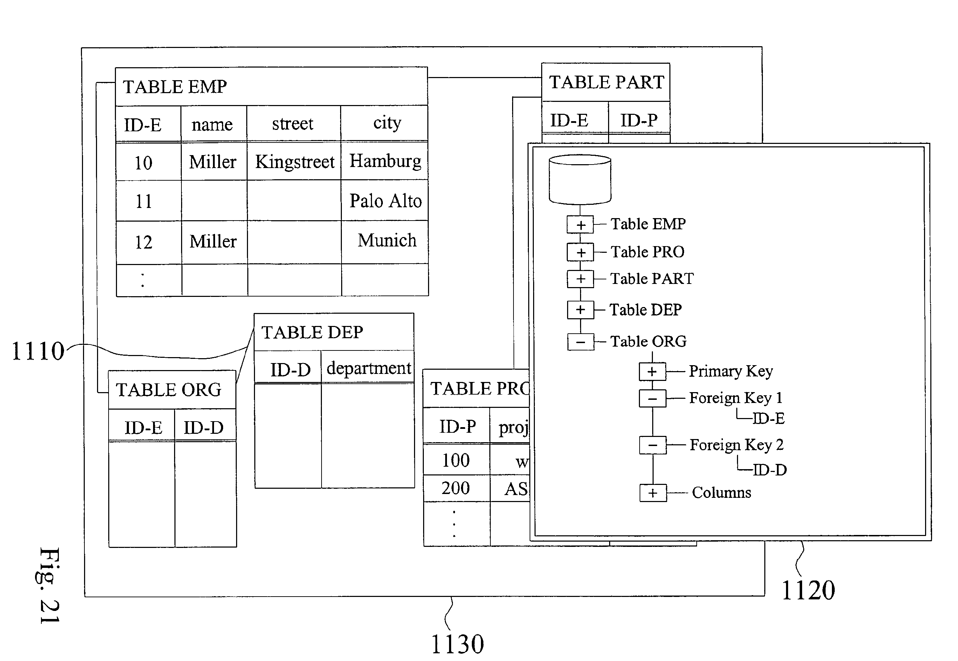

In Fig. 21, a situation is depicted in which the first and the second graphical user interfaces 1120 and 1130 are updated after the "create table" operation has been completed. In window 1120, a representation node for new foreign key 2 ID-D is depicted. Correspondingly, table ORG has a new column ID-D and a newly created relation between table ORG and DEP is depicted by line 1110 in window 1130. Thus, the user is enabled, for example, to create a relation between the two tables ORG and DEP which constitutes that each employee of the company relates to a department of this company by a drag-and-drop operation between corresponding representation nodes in the structural view of the database design displayed in first graphical user interface. The user may further benefit from having two windows displaying different views of the database design as depicted in Figs. 19 and 21. The hierarchical tree view in first window 1050, 1120 and the table view in second window 1060, 1130 supports the user in not losing track of the relations in a database design by providing two different database design views at the same time.

It may occur, that a user wants to create a relation between two existing columns in different tables. First, it has to be checked whether both columns are of the same type otherwise according to the principles of database design, no relation can be created.

According to an embodiment of the present invention, the user can easily get the type information of each of the two columns by expanding the property note indicating the type information in the hierarchical tree view as indicated, e.g., by type property node 550 for column "city" of table EMP in Fig. 8. This allows the user to compare the column types in the same graphical user interface in which he or she wants to create the relation. This makes it possible to easily check the respective column types before trying to create the relation and in the same graphical user interface displaying the hierarchical tree view in which the user will then create the relation without scrolling through, e.g., a large database relation design view.

The creation operation itself is similar to the one described above with reference to Figs. 19 to 21 with the minor difference that in operation 2040 it is checked whether the dragged primary key column representation of the first table is dropped on the selected key column representation of the second table.

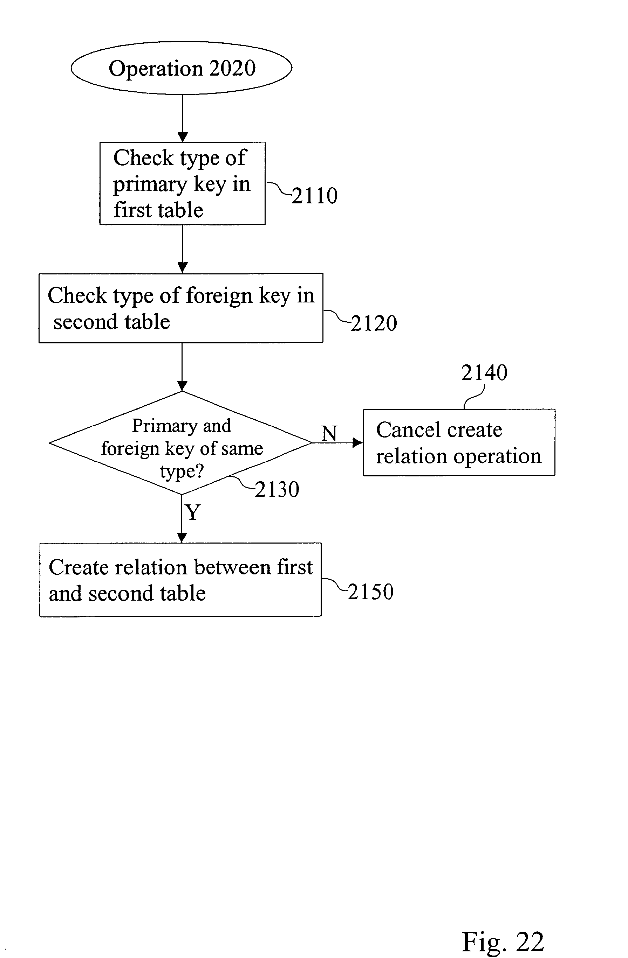

The operations necessary to create a relation between two existing tables will now be described according to an embodiment of the present invention and with reference to Fig. 22. Coming from operation 2020 in Fig. 20, in which the identity of the primary key column of the first table is determined, and the type of this primary key column is also checked in operation 2110. After the key column of the second table is identified, e. g., by a mouse click on that key column or after a copy of the primary key column representation of the first table has been dropped on that key column representation of the second table (operation 2040), also the type of that key column of the second table is checked in operation 2120. In decision operation 2130, it is decided whether the primary key column of the first table and the foreign key column of the second table of the same type. This is done, for example, by fetching the type from the type information cell 690 of both entries of the selected column and a type compare operation between these types. As a result, if the selected columns are not of the same type, operation 2130 branches out to operation 2140 and the create relation operation is cancelled. In the other case, if the selected column are of the same type, operation 2130 branches to operation 2150 and a relation between the first and the second table is created as described above with reference to Fig. 20.

According to further embodiments, other known drag-and-drop operations which enable the creation of relations between tables by dragging and dropping database object representations in the hierarchical tree view could also be implemented.

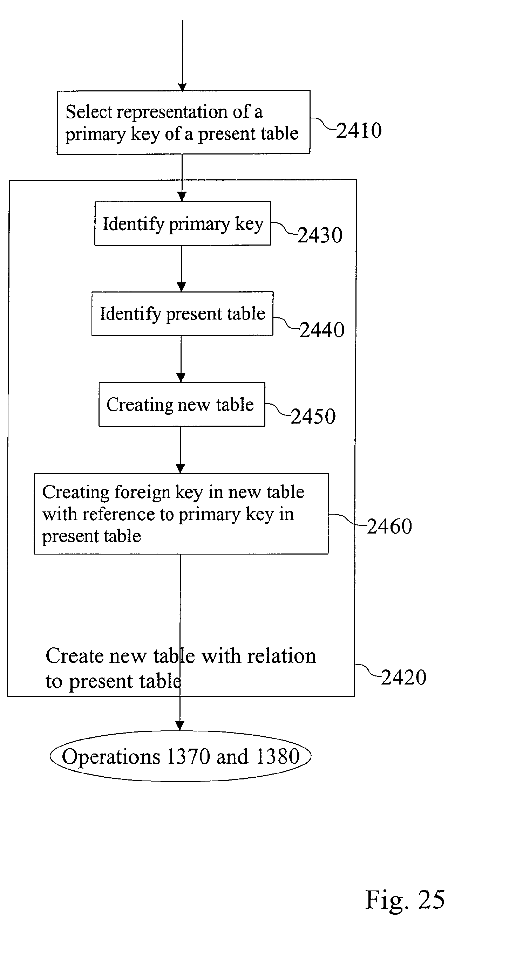

According to a further embodiment of the present invention which will now be described with reference to Fig. 25, a method is provided which enables a user to create a new table with a relation to a present table in the database design. For example, starting from a database design as displayed in graphical user interfaces 1710 and 1750 in Fig. 17, a user wants to create a new table ORG with a foreign key ID-E relating to primary key ID-E of table EMP as depicted in Fig. 19. According to this embodiment, a representation node of a primary key of a present table is selected by a selection request input by the user (operation 2410). This selection operation is similar to the selection operations which have already been described above. Referring to Fig. 17, a user may select the primary key representation in table EMP either by mouse clicking on the primary key column ID-E in table EMP in the second graphical user interface 1750 or by expanding the representation node of table EMP in first graphical user interface 1710 and then mouse clicking on the primary key representation node of table EMP in structural view 1720. After the primary representation has been selected, a new table with a relation to the table of the selected primary is created in operation 2420. Operation 2420 may be divided into different subsequent sub-operations 2430 to 2460. In operation 2430, the primary key corresponding to the selected key representation is identified. This comprises that the respective primary key is loaded from the database design or its respective entry is selected in the structural representation table 31 as described above. In a next operation 2440, the present table to which the identified primary key belongs is also identified. In operation 2450, a new table is created followed by operation 2460 in which in the new table a foreign key with reference to the primary key in the present table is created. To create a table the SQL command statement CREATE TABLE may be used as respective command statement in operation 2460, similar to operation 1360 in Fig. 13. A foreign key with reference to a primary key is created by defining a foreign key with a REFERENCES statement relating to that primary key. For example, to create new table ORG, the name of the primary key "ID-E" and its type as identified in operation 2430 and the name of the present table "EMP" as identified in operation 2440 are used to create the following command statement:

    CREATE TABLE ORG (ID-E int primary key, FOREIGN KEY (ID-E)
    REFERENCES (EMP.ID-E))

If the execution of the created new table operation 2420 is completed, the structural representation and the database design are updated and the updated views of the database design are displayed in first and second graphical user interfaces 1050 and 1060 as depicted in Fig. 19 and described above (operations 1370 and 1380). Thus, this embodiment according to the present invention enables the user to create a new table with predefined foreign keys by simply selecting a representation of a primary key of a present table according to a first input option and further inputting a create new table request according to a second input option provided to the user.

It is within the scope of the present invention, that the methods and systems consistent with the present invention are under the control of a database server. According to an embodiment of the invention, the database server 50 is connected over a network 70 to a client computer 60 under which the data prepared for displaying in the first and/or second graphical user interface are displayed on a video display 65. The client computer may further receive requests input by the user according to the input options provided by the methods and systems consistent with the present invention. The received requests are then forwarded by the client computer to the database server and the database server then uses those requests in the respective operations as described above.

According to a further embodiment, a method may be provided for implementing on a computer a user interface for providing a structural view of a database design which comprises a plurality of tables and relations linking said tables, said method comprising the following steps: analyzing the structure of said tables and relations; extracting a structural representation of said database design from said structure of said tables and relations; and preparing data for displaying in a first graphical user interface said structural view of said database design corresponding to said structural representation.

According to a further embodiment, a computer system may be provided comprising: means for analyzing the structure of said tables and relations, means for extracting a structural representation of said database design from said structure of said tables and relations, and means for preparing data for displaying in a first graphical user interface said structural view of said database design corresponding to said structural representation.

The invention may be implemented in a database design system or tool or even in an office suite program such as StarOffice produced by Sun Microsystems, Inc. Sun, Sun Microsystems, Inc., the Sun logo, and StarOffice are trademarks or registered trademarks of Sun Microsystems, Inc. in the United States and other countries. All other company and product names may be trademarks of their respective companies.

While the invention has been particularly shown with reference to a preferred embodiment thereof, it will be understood by those skilled in the art that various other changes in the form and details may be made therein without departing from the spirit and scope of the invention.

## Claims

1. A method for implementing on a data processing system a user interface for providing a structural view of a database design which comprises a plurality of tables and relations linking said tables, said method comprising:

    analyzing the structure of said tables and relations;
    extracting a structural representation of said database design from said structure of said tables and relations;
    preparing data for displaying in a first graphical user interface said structural view of said database design corresponding to said structural representation.

2. The method of claim 1, wherein said structural representation includes information about primary and/or foreign keys and columns of said tables, said structural view is a hierarchical tree view, and wherein said method further comprises:

    preparing data for displaying representations of said tables as sibling nodes in said hierarchical tree view;

preparing data for displaying representations of said primary and/or foreign keys and a representation for said columns as child nodes to the node of the respective table in said hierarchical tree view; and

preparing data for displaying the column names of said primary and foreign keys and of said columns as child nodes to the respective primary key, foreign key and column nodes in said hierarchical tree view.

3. The method of claim 2, wherein said database design further includes one or more catalogues and/or schemes, and said method further comprises:

preparing data for displaying representations of said catalogues and/or said schemes of said database as parent nodes to said nodes of said tables in said hierarchical tree view.

4. The method of claim 2 or 3, wherein said structural representation includes information about the properties of database objects as said catalogues, schemes, tables, primary and foreign keys and columns represented by a node in said hierarchical tree view, and wherein said method further comprises:

preparing data for displaying representations of said properties as child nodes to the nodes of the respective database objects in said hierarchical tree view.

5. The method of one of claims 2, 3 or 4 for further enabling a user to navigate through the structure of said database design, wherein said method further comprises:

preparing data for displaying in said hierarchical tree view an indication for each node as to whether this node has any child nodes, and if so, incorporating said child node representation into said parent node to thereby reduce the number of branches prepared for displaying in said tree view based on a incorporating request input by the user; and

expanding said parent node representation such that said child node is again prepared for displaying as a separate node in said hierarchical tree view based on an expand request input by the user.

6. The method of one of the preceding claims, further enabling a user to modify said database design, wherein the method comprises:

selecting the database object corresponding to a node which has been selected in said hierarchical tree view based on a selection request input by the user;

modifying the selected database object based on a modification request input by the user; and preparing data for displaying an update of said hierarchical tree view after said modification has been completed.

7. The method of claim 6, wherein the method further comprises:

identifying the selected database object;

preparing data for displaying in said first graphical user interface that the database object corresponding to said selected node has been selected;

identifying a modification request input by an user;

executing the modification request on said selected database object;

updating the structural representation.

8. The method of one of claims 6 or 7, further comprising:

providing the user with a first input option for selecting a database object by selecting the corresponding node of the database object in said first graphical user interface; and

providing the user with a second input option after said database object has been selected for modifying the selected database object and/or database design in relation to said database object.

9. The method of one of claims 6 to 8, wherein one or more of the following modification requests are implemented:

a creation request, creating a new database object in said database design;

a deletion request, deleting the selected database object from said database design;

a relation request, creating a relation between tables in said database design.

10. The method of one of the preceding claims, further enabling a user to create a new table with a relation to a present table in the database design, said method comprising:

selecting a representation of at least one primary key of said present table based on a selection request input by the user;

creating said new table with a relation to said primary key based on a creation request input by the user.

11. The method of claim 10, wherein the create table operation further comprises:

identifying the primary key corresponding to said selected representation;
identifying the present table of the primary key;
creating in said new table a foreign key with a reference to said primary key in said present table.

12. The method of one of the claims 6 to 11, wherein the method further comprises:

preparing data for displaying another view of said database design in a second graphical user interface;
bringing said prepared data for displaying said structural view and said prepared data for displaying said other view into conformity with said modifies database design, based on an update request input by an user.

13. The method of claim 12, wherein the method further comprises:

copying said structural representation to a structural representation copy;
updating said structural representation copy based on said modification request;
preparing data for displaying an updated structural view based on said updated structural representation copy;
updating said structural representation by said updated structural representation copy, based on an update request input by the user;
discarding structural representation copy;
updating database design by structural representation, if said update request was input.

14. The method of one of the preceding claims, wherein the method further comprises:

displaying the data prepared for displaying in said first and/or second graphical user interfaces on a video display.

15. The method of one of the preceding claims, wherein the method is under control of a database server, the database server is connected to a client, and the method further comprises:

under control of said client:

displaying the data prepared for displaying in said first graphical user interface;
receiving said requests input by the user and forwarding said user requests to the database server.

16. A software tool for implementing on a data processing system an user interface for providing a structural view of a database design which comprises a plurality of tables and relations linking said tables, said software tool comprising:

a software code portion for analyzing the structure of said tables and relations;
a software code portion for extracting a structural representation of said database design from said structure of said tables and relations;
a software code portion for preparing data for displaying in a first graphical user interface said structural view of said database design corresponding to said structural representation.

17. The software tool of claim 16, wherein said structural representation includes information about primary and/or foreign keys and columns of said tables, said structural view is a hierarchical tree view, and wherein said software tool further comprises:

a software code portion for preparing data for displaying representations of said tables as sibling nodes in said hierarchical tree view;
a software code portion for preparing data for displaying representations of said primary and/or foreign keys and a representation for said columns as child nodes to the node of the respective table in said hierarchical tree view; and
a software code portion for preparing data for displaying the column names of said primary and foreign keys and of said columns as child nodes to the respective primary key, foreign key and column nodes in said hierarchical tree view.

18. The software tool of one of claims 16 or 17, wherein said database design further includes one or more catalogues and/or schemes, and said software tool further comprises:

a software code portion for preparing data for displaying representations of said catalogues and/or said schemes of said database as parent nodes to said nodes of said tables in said hierarchical tree view.

19. The software tool of one of claims 16 to 18, wherein said structural representation includes information about properties of database objects as said catalogues, schemes, tables, primary and foreign keys and columns represented by a node in said hierarchical tree view, and wherein said software tool further comprises:

a software code portion for preparing data for displaying representations of said properties as child nodes to the nodes of the respective database objects in said hierarchical tree view.

20. The software tool of one of claims 16 to 19, for further allowing an user to navigate through the structure of said database design, wherein the software tool further comprises:

a software code portion for preparing data for displaying in said hierarchical tree view an indication for each node as to whether this node has any child nodes, and if so, incorporating said child node representation into said parent node based on an incorporating request input by the user; and
a software code portion for expanding said parent node representation such that said child node again is prepared for displaying as a separate node in said hierarchical tree view based on an expand request input by the user.

21. The software tool of one of claims 16 to 20, further allowing the user to modify the structure of said database design, wherein the software tool comprises:

a software code portion for selecting said database object corresponding to a node which has been selected in said hierarchical tree view based on a selection request input by the user;
a software code portion for modifying the selected database object based on a modification request input by the user; and
a software code portion for preparing data for displaying an update of said hierarchical tree view after said modification has been completed.

22. The software tool of claim 21, wherein the software tool further comprises:

a software code portion for identifying the selected database object;
a software code portion for preparing data for displaying in said first graphical user interface that the database object corresponding to said selected node has been selected;
a software code portion for identifying a modification request input by an user;
a software code portion for executing the modification request on said selected database object;
a software code portion for updating the structural representation.

23. The software tool of one of claims 21 or 22, further comprising:

a software code portion for providing to the user a first input option for selecting a database object by selecting the corresponding node of the database object in said first graphical user interface; and
a software code portion for providing to the user a second input option after said database object has been selected for modifying the selected database object and/or database design in relation to said database object.

24. The software tool of one of claims 16 to 23, wherein one or more of the following modification requests are implemented as software code portions:

a creation request, for creating a database object in said database design;
a deletion request, for deleting the selected database object from said database design;
a relation request, for creating a relation between two tables in said database design.

25. The software tool of one of claims 16 to 24, further enabling a user to create a new table with a relation to a present table in the database design, said software tool comprising:

a software code portion for selecting a representation of at least one primary key of said present table based on a selection request input by the user;
a software code portion for creating said new table with a relation to said primary key based on a creation request input by the user.

26. The software tool of claim 25, wherein the software code portion for creating said new table further comprises:

a software code portion for identifying the primary key corresponding to said selected representation;
a software code portion for identifying the present table of the primary key;
a software code portion for creating in said new table a foreign key with a reference to said primary key in said present table.

27. The software tool of one of claims 21 to 26, wherein the software tool further comprises:

a software code portion for preparing data for displaying another view of said database design in a second graphical user interface;
a software code portion for bringing said prepared data for displaying said structural view and said prepared data for displaying said other view into conformity with said modified database design, based on an update request input by an user.

28. The software tool of claim 27, wherein the software tool further comprises:

a software code portion for copying said structural representation to a structural representation copy;

a software code portion for updating said structural representation copy based on said modification request;

a software code portion for preparing data for displaying an updated structural view based on said updated structural representation copy;

a software code portion for updating said structural representation by said updated structural representation copy, based on an update request input by the user;

a software code portion for discarding structural representation copy;

a software code portion for updating database design by structural representation, if said update request was input.

29. The software tool of one of the preceding claims, wherein the software tool further comprises:

a software code portion for displaying the data prepared for displaying in said first and/or second graphical user interfaces on a display unit.

30. The software tool of one of the preceding claims, wherein the software tool is under control of a database server, the database server is connected to a client, and the software tool further comprises:

under control of said client:

a software code portion for displaying the data prepared for displaying in said first graphical user interface;

a software code portion for receiving said requests input by the user and forwarding said user requests to the database server.

31. A computer program product comprising computer program code which when executed on a data processing system enables said data processing system to carry out the method according to one of claims 1 to 15.

32. The computer program product of claim 31 wherein said computer program code is executed on a server computer and the server computer is connected to a database server storing said database design.

33. The computer program product of claim 32, wherein the server computer is connected to a client computer, which further enables said client computer to carry out the operations:

- opening a graphical user interface on a display unit connected with said client computer; and
- displaying the data prepared for displaying in said graphical user interface.

34. A computer program comprising computer program code which when executed on a data processing system enables said data processing system to carry out the method according to one of claims 1 to 15.

35. A data processing system comprising:

a secondary storage device comprising a database design having tables and relations linking said tables;

a processing unit and a storage unit;

said processing unit analyses in response to software code portions stored in said storage unit the structure of said tables and relations accessible by said processing unit;

said processing unit further extracts in response to software code portions stored in said storage unit a structural representation of said database design from said structure of said tables and relations;

said processing unit further prepares in response to software code portions stored in said storage unit data for displaying in a graphical user interface a structural view of said database design corresponding to said structural representation.

36. The data processing system of claim 35, further comprising a video display and an input unit;

said processing unit processes said structural representation in response to software code portions stored in said storage unit and requests input by an user in said input unit, said video display displays said structural view of said database design in said graphical user interface.

37. The data processing system of claim 36, wherein said secondary storage device, said processing unit and/or said storage unit are arranged at the server side and the video display and the input unit are arranged on the client side.

38. A computer-readable medium containing instructions that cause a processing system to perform a method according to one of claims 1 to 15.

**39.** A computer-readable memory device encoded with a data structure with entries, each entry reflecting a database object in a structural representation of a database design that is provided by a computer program which is encoded in the memory device and which is run by a processor, each entry comprising:

a first storage area that stores a representation of said database object;
a second storage area that stores structural information of said database object; and
a third storage area that stores type information and/or properties of said database object.

PRIOR ART

Fig. 1

**TABLE EMP** — 210

| ID-E | name | street | city |
|---|---|---|---|
| 10 | Miller | Kingstreet | Hamburg |
| 11 | | | Palo Alto |
| 12 | Miller | | Munich |
| ⋮ | | | |

**TABLE PART** — 220

| ID-E | ID-P | part in % |
|---|---|---|
| ⋮ | | |
| 10 | 100 | 20 |
| 10 | 200 | 0 |
| 11 | 100 | 0 |
| 11 | 200 | 50 |
| ⋮ | | |

**TABLE PRO**

| ID-P | project name | budget |
|---|---|---|
| 100 | web-site | 10.000,-- |
| 200 | ASP-server | 50.000,-- |
| ⋮ | | |

PRIOR ART

Fig. 2

Fig. 3

29    31

Structural
representation

Server

50

70

Internet

65

Video Display

32

Data prepared for
displaying

Client

60

40

Fig. 4

Start

Analyze structure of
tables and relations

~310

Extract structural representation
from structure of tables and
relations

~320

Prepare data for displaying
a structural view corresponding to
structural representation

~330

to Fig. 11

Fig. 5

Generate sibling node — 410

Prepare data for displaying table representation as sibling node — 420

Generate child node — 430

Prepare data for displaying key representation as child node — 440

Generate child node — 450

Prepare data for displaying column name as child node — 460

further column for that key? — 470
Y
N

further key in table? — 480
Y
N

further table in data-base design? — 490
Y

to Fig. 11

Fig. 6

600

| Database object representation | Structural information | Type information |
|---|---|---|

670       680       690

31

| TABLE EMP | Sibling node | Table |
|---|---|---|
| . . . | . . . | . . . |
| Columns EMP | Child node to TABLE EMP | Representation of columns of TABLE EMP |
| . . . | . . . | . . . |
| Column city | Child node to colums EMP | Column of TABLE EMP type: string |
| 570 . . . | 580 . . . | 590 . . . |

560

Fig. 7

500

database design —~ 510

530 —~ [−]——— Table EMP

[−]——— Primary Key

[−]— ID-E                                            520

└ [relation to table PART]

[−]——— Columns

——— ID-E

——— name

——— street                          550

——— city

└ [type: string]

540 —~ [+]——— Table PRO

[−]——— Table PART

[−]——— Primary Key

——— ID-E

——— ID-P

[−]——— Foreign Key 1

[+]——— ID-E

[−]——— Foreign Key 2

——— ID-P

[−]——— Columns

——— ID-E

——— ID-P

——— part in %

Fig. 8

Node selection request ⌇ 610

Select database object ⌇ 620

Modification request ⌇ 630

Modify selected
database object ⌇ 640

Prepare data for displaying
hierarchical tree view ⌇ 650

to Fig. 11

Fig. 9

Analyse modification request — 710

Define parameter for SQL statement — 720

Generate SQL statement — 730

Transmit SQL statement to database server — 740

Execute SQL statement — 750

Fig. 10

from Figs. 5, 6, or 9

Transmit prepared data
to video display
810

Display graphical
user interface
820

Display prepared data in
graphical user interface
830

Fig. 11

**Fig. 12**

TABLE EMP

| ID-E | name | street | city |
|------|--------|-----------|-----------|
| 10 | Miller | Kingstreet | Hamburg |
| 11 | | | Palo Alto |
| 12 | Miller | | Munich |
| ... | | | |

TABLE PRO

| ID-P | project name | budget |
|------|--------------|----------|
| 100 | web-site | 10.000,-- |
| 200 | ASP-server | 50.000,-- |
| ... | | |

TABLE PART

| ID-E | ID-P | part in % |
|------|------|-----------|

Delete — 940

950

910

- Table EMP
- Table PRO
- Table PART
  - Primary Key
  - Foreign Key 1 — ID-E
  - Foreign Key 2
  - Columns
    - ID-E
    - ID-P
    - **part in %**

930

920

EP 1 367 503 A1

31

```
                    ┌─────────────┐
                    │  Database   │
              N     │   object    │──── 1310
           ◄────────│  selected?  │
                    └─────────────┘
                           │ Y
                           ▼
              ┌──────────────────────────┐
              │ Identify database object │
              │ in structural            │──── 1320
              │ representation table     │
              └──────────────────────────┘
                           │
                           ▼
              ┌──────────────────────────────────┐
              │ Highlight database object in      │──── 1330
              │ user interface                    │
              └──────────────────────────────────┘
                           │
                           ▼
                    ┌─────────────┐
              N     │ Modification│──── 1340
           ◄────────│ request     │
                    │ input?      │
                    └─────────────┘
                           │ Y
                           ▼
              ┌──────────────────────────┐
              │ Identify modification    │──── 1350
              │ request                  │
              └──────────────────────────┘
                           │
                           ▼
              ┌──────────────────────────┐
              │ Execute modification on  │──── 1360
              │ identified database      │
              │ object                   │
              └──────────────────────────┘
                           │
                           ▼
              ┌──────────────────────────┐
              │ Update structural        │
              │ representation table and │──── 1370
              │ database design          │
              └──────────────────────────┘
                           │
                           ▼
              ┌──────────────────────────────────┐
              │ Display updated structural view   │──── 1380
              │ in user interface                 │
              └──────────────────────────────────┘
```

1390

Fig. 13

1400

| Column "ID-P" | Child node to columns PART | Primary key of TABLE PART |
|---|---|---|
| Column "part in %" | Child node to columns PART | Column of TABLE PART; type: integer |
| . . . | . . . | . . . |

1410

---

1420 — DELETE COLUMN "part in %" in TABLE PART

---

1400'

| Column "ID-P" | Child node to columns PART | Primary key of TABLE PART |
|---|---|---|
|  |  |  |
| . . . | . . . | . . . |

1410'

Fig. 14

1540

**TABLE EMP**

| ID-E | name | street | city |
|------|------|--------|------|
| 10 | Miller | Kingstreet | Hamburg |
| 11 | | | Palo Alto |
| 12 | Miller | | Munich |
| : | | | |

**TABLE PART**

| ID-E | ID-P |
|------|------|
| : | |

1520

- Table EMP
- Table PRO
- Table PART
  - Primary Key
  - Foreign Key 1
    - ID-E
  - Foreign Key 2
  - Columns
    - ID-E
    - ID-P

**TABLE PRO**

| ID-P | project name | budget |
|------|-------------|--------|
| 100 | web-site | 10.000,-- |
| 200 | ASP-server | 50.000,-- |
| : | | |

1550    1530    1510

Fig. 15

```
                    Operation 1360

                          │
                          ▼
              ┌─────────────────────┐
              │ Update structural   │
              │ representation table│──1610
              └─────────────────────┘
                          │
                          ▼
         ┌──────────────────────────────┐
         │ Display updated structural   │
         │ view in first graphical user │──1620
         │ interface                    │
         └──────────────────────────────┘
                          │
                          ▼                         1640
                        ╱     ╲                       │
                      ╱  Update ╲        N    ┌──────────────────┐
                     ╱  database  ╲──────────▶│ Undo modification│
                      ╲  design? ╱            │ request          │
                        ╲      ╱──1630        └──────────────────┘
                          │
                          Y
                          ▼
         ┌──────────────────────────────┐
         │ Update database design view  │
         │ in second graphical user     │──1650
         │ interface                    │
         └──────────────────────────────┘
                          │
                          ▼
         ┌──────────────────────────────┐
         │ Display database design view │
         │ in second graphical user     │──1660
         │ interface                    │
         └──────────────────────────────┘
```

Fig. 16

36

**TABLE EMP** — 1740

| ID-E | name | street | city |
|------|------|--------|------|
| 10 | Miller | Kingstreet | Hamburg |
| 11 | | | Palo Alto |
| 12 | Miller | | Munich |
| : | | | |

**TABLE PART**

| ID-E | ID-P | part in % |
|------|------|-----------|
| : | | |

**TABLE PRO**

| ID-P | project name | budget |
|------|--------------|--------|
| 100 | web-site | 10.000,-- |
| 200 | ASP-server | 50.000,-- |
| : | | |

1720

- [+] Table EMP
- [+] Table PRO
- [−] Table PART
  - [+] Primary Key
  - [−] Foreign Key 1
    - ID-E
  - [+] Foreign Key 2
  - [−] Columns
    - ID-E
    - ID-P

Update ~ 1760
Undo ~ 1770

1750   1730   1710

Fig. 17

Copy structural
representation table ⌐1810

Update copy of structural
representation table ⌐1820

Display structural view
corresponding to updated copy of ⌐1830
structural representation table

1840

Update
database design? ——— N

Y 1850

Update structural representation
table by copy of structural
representation table

Operation 1650

Discard copy of structural
represenation table ⌐1860

Display structural view
corresponding to structural ⌐1870
representation table

Fig. 18

Fig. 19

Fig. 20

Fig. 21

Operation 2020

Check type of
primary key in
first table          ~2110

Check type of foreign key in
second table          ~2120

2140

Primary and
foreign key of same
type?          N → Cancel create
relation operation

~2130

Y

Create relation between first
and second table          ~2150

Fig. 22

42

**960**

| Select Modification | — | □ | ✕ |
|---|---|---|---|
| Copy | | | |
| Paste | | | |
| Delete | | | |
| Create | | | |
| Relation | | | |

**970** — Delete

**980** — Create

**990** — Relation

**920**

- + — Table EMP
- + — Table PRO
- − — Table PART
  - + — Primary Key
  - − — Foreign Key 1
    - └ — ID-E
  - + — Foreign Key 2
  - − — Columns
    - ── ID-E    **930**
    - ── ID-P
    - ── part in %

**950**

**910**

Fig. 23

Fig. 24

Select representation of a
primary key of a present table 〜2410

Identify primary key 〜2430

Identify present table 〜2440

Creating new table 〜2450

Creating foreign key in new table
with reference to primary key in
present table 〜2460

Create new table with relation
to present table 〜2420

Operations 1370 and 1380

Fig. 25

| European Patent Office | EUROPEAN SEARCH REPORT | Application Number EP 02 01 1493 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | "GRAPHICAL DEPICTION OF DATABASE TABLE AND VIEW RELATIONSHIPS" IBM TECHNICAL DISCLOSURE BULLETIN, IBM CORP. NEW YORK, US, vol. 37, no. 6A, 1 June 1994 (1994-06-01), pages 477-480, XP000455853 ISSN: 0018-8689 | 1-11, 14-26, 29-39 | G06F17/30 |
| A | * the whole document * | 12,13, 27,28 | |
| | --- | | |
| X | POMAR, E.: "Linux/390 DB2 UDB and ERwin Case Study" COMPUTER ASSOCIATES INC., - 2001 pages 1-27, XP002217565 US | 1-11, 14-26, 29-39 | |
| A | * the whole document * | 12,13, 27,28 | |
| | --- | | |
| X | ANONYMOUS: "Paradigm Plus: Round-Trip Engineering with ERwin, Release 3.6 for UNIX and Windows Workstations" PLATINUM TECHNOLOGY, August 1998 (1998-08), pages 1-55, XP002217566 US | 1-11, 14-26, 29-39 | TECHNICAL FIELDS SEARCHED (Int.Cl.7) G06F |
| A | * the whole document * | 12,13, 27,28 | |
| | --- | | |
| X | WO 01 67309 A (RADIANT LOGIC INC) 13 September 2001 (2001-09-13) * page 42, line 5 - page 54, last line; figures 9,11,19A-26 * | 1-39 | |
| | --- | | |
| | -/-- | | |

The present search report has been drawn up for all claims

| Place of search MUNICH | Date of completion of the search 21 October 2002 | Examiner Jaedicke, M |
|---|---|---|

EPO FORM 1503 03.82 (P04C01)

**European Patent Office**

## EUROPEAN SEARCH REPORT

Application Number

EP 02 01 1493

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | CAMPBELL D: "EXTENDING THE WINDOWS EXPLORER WITH NAME SPACE EXTENSIONS" MICROSOFT SYSTEMS JOURNAL, MICROSOFT CO., REDMOND, WA, US, vol. 5, no. 6, July 1996 (1996-07), pages 89-96, XP000874429 ISSN: 0889-9932 * abstract; figures 1-6 * ----- | 1-39 | |
| | | | TECHNICAL FIELDS SEARCHED (Int.Cl.7) |

The present search report has been drawn up for all claims

| Place of search | Date of completion of the search | Examiner |
|---|---|---|
| MUNICH | 21 October 2002 | Jaedicke, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 367 503 A1**

**ANNEX TO THE EUROPEAN SEARCH REPORT
ON EUROPEAN PATENT APPLICATION NO.**   EP 02 01 1493

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2002

| Patent document cited in search report | Publication date | Patent family member(s) | Publication date |
|---|---|---|---|
| WO 0167309 A | 13-09-2001 | AU 4359701 A<br>WO 0167309 A2<br>US 2001034733 A1 | 17-09-2001<br>13-09-2001<br>25-10-2001 |

EPO FORM P0459

For more details about this annex : see Official Journal of the European Patent Office, No. 12/82

47